**Europäisches Patentamt**

**European Patent Office**

**Office européen des brevets**

(19)

(11) **EP 1 110 059 B1**

(12) **EUROPEAN PATENT SPECIFICATION**

(45) Date of publication and mention
of the grant of the patent:
**15.09.2004 Bulletin 2004/38**

(21) Application number: **99925945.0**

(22) Date of filing: **28.05.1999**

(51) Int Cl.⁷: $G01F\ 1/84$

(86) International application number:
**PCT/US1999/011771**

(87) International publication number:
**WO 2000/012970 (09.03.2000 Gazette 2000/10)**

(54) **CORIOLIS FLOWMETER HAVING ITS FLOW CALIBRATION FACTOR INDEPENDENT OF MATERIAL DENSITY, AND METHOD OF OPERATING IT**

CORIOLISSTRÖMUNGSMESSER MIT EINEM VON DER STOFFDICHTE UNABHÄNGIGEN KALIBRIERFAKTOR, UND VERFAHREN ZU SEINEM BETRIEB

DEBITMETRE-MASSE A EFFET DE CORIOLIS DONT LE FACTEUR DE CALIBRAGE DU DEBIT EST INDEPENDANT DE LA DENSITE DE LA MATIERE, ET PROCEDE POUR SON EXPLOITATION

(84) Designated Contracting States:
**CH DE FR GB LI**

(30) Priority: **31.08.1998 US 144030**

(43) Date of publication of application:
**27.06.2001 Bulletin 2001/26**

(73) Proprietor: **MICRO MOTION INCORPORATED**
**Boulder Colorado 80301 (US)**

(72) Inventors:
• **VAN CLEVE, Craig Brainerd**
**Lyons, CO 80540 (US)**
• **STACK, Charles, Paul**
**Louisville, CO 80027 (US)**
• **LANHAM, Gregory, Treat**
**Longmont, CO 80501 (US)**

(74) Representative: **Bibby, William Mark et al**
**Mathisen, Macara & Co.,**
**The Coach House,**
**6-8 Swakeleys Road**
**Ickenham Uxbridge UB10 8BZ (GB)**

(56) References cited:
**EP-A- 0 831 306**      **WO-A-00/02020**

## Description

### Field of the Invention

This invention relates to a method and apparatus for a single tube Coriolis flowmeter and in particular, to method and apparatus for a Coriolis flowmeter having a flow calibration factor that is independent of material density.

### Problem

Single tube Coriolis flowmeters are desirable because they eliminate the expense and the plugging problems of flow splitting manifolds of dual tube Coriolis flowmeters. Prior art single tube Coriolis flowmeters have a disadvantage in that as the density of the measured material changes, the calibration or flow sensitivity of the meter changes. It is desired that a flowmeter generate accurate output information, such as mass flow rate, regardless of the density of the material flow. Thus, if a flowmeter accurately outputs a mass flow rate reading of 10 kg/minute for a material having a specific gravity of 1.0 (water), it is desired that the meter accurately output a reading of 10 kg/minute for the same mass flow rate for material flows of other densities.

A flowmeter that has this capability is said to have a calibration factor that is independent of the density of its material flow, or a flat calibration factor. Such a flowmeter is also said to have a constant flow sensitivity in that it accurately outputs the same mass flow rate regardless of the density of the material flow. Sensitivity (s) is defined as microseconds of time delay between the velocity sensors of the flow meter divided by the mass flow rate

$$\left( s = \frac{\Delta t}{\dot{M}} \right)$$

where $\Delta t$ equals the time difference from the velocity sensors of the flowmeter and where $\dot{M}$ equals mass flow rate. Thus, for a meter to have a flat calibration factor or a constant flow sensitivity, this expression has to have a constant value for any flow rate and any material density. It would provide, for example, an output of one microsecond of time delay for a flow rate of 10 kg/minute regardless of material density and would provide an output of 10 microseconds time delay for a flow rate of 100 kg/minute regardless of material density. In both cases the meter sensitivity is 0.1 microsecond/kg/min. A flowmeter having the above characteristics would be advantageous in that it would eliminate or minimize the need for further calibration or compensation.

Flowmeter change in calibration or flow sensitivity has traditio nally been minimized by use of massive counter balance members (henceforth nown as balance bars). Any remaining change in sensitivity with density has been compensated by use of correction algorithms based on the resonant frequency of the meter in its drive mode. The use of massive balance bars has disadvantages in cost as well as in preventing the use of other performance enhancing features such as sensitivity enhancing balance bars. A correction algorithm has the disadvantage that it must be calibrated using materials of differing density and it must be executed in software. The present invention eliminates the need for a massive balance bar and a correction algorithm by a unique design of the balance bar. In order to understand this design, it is first necessary to understand how traditional Coriolis flowmeters operate.

In traditional dual tube Coriolis flowmeters, the flow tubes are vibrated out of phase with each other. The dual flow tubes act as a counterbalance to each other to create a dynarnically balanced structure. Velocity sensors are located at two locations along the flow tubes to sense the relative velocity between the flow tubes. The velocity sensors are usually located equal distances upstream and downstream from the tubes' midpoints. Each velocity sensor consists of a magnet fastened to one flow tube and a coil fastened to the other. The relative motion of the coil through the magnetic field produces a voltage. The sinusoidal motion of the vibrating flow tubes produces a sinusoidal voltage in each sensor. When there is no material flow, the voltages from the two velocity sensors are in phase with each other. With material flow, the vibrating tubes are distorted by the Coriolis force of the moving material to cause a phase difference between the two sensor voltages. The mass flow rate is proportional to this phase difference. It is important to note that both flow tubes are distorted equally (for an equal division of flow) and each flow tube has the same phase shift as the other at corresponding locations. The upstream sensor magnet velocity has the same phase as the upstream coil velocity and both have the same phase as the voltage generated by the magnet-coil sensor pair. The downstream sensor has a different phase than the upstream but again, the coil on one tube has the same phase as the magnet on the other. To determine the time delay, $\Delta t$, the phase delay between the two velocity sensors is divided by the drive frequency (in radians/sec). Dividing the time delay by the meter sensitivity gives the flow rate.

In single tube flowmeters, the vibrating flow tube is counterbalanced by a balance bar rather than another flow tube. Velocity sensor magnets (or coils) are mounted to the balance bar as though it were the second flow tube described above. However, since material does not flow through the balance bar, it does not experience any Coriolis force or significant phase shift with flow. The velocity sensors sense the relative velocity between the phase shifted flow tube and the non-phase shifted balance bar. The flow tube and balance bar velocities at each velocity sensor may be represented by velocity vectors having phase angle and amplitude. The relative velocity (and voltage out of each velocity sensor) can be determined by adding the two velocity vectors. The flow tube velocity vector has a phase shift due to material flow. The balance bar velocity vector has zero phase shift. Adding these vectors gives the net phase shift with flow of the velocity sensor. The net phase shift of the output voltage of each velocity sensor is reduced by the non-phase shifted balance bar. This net phase shift reduction equates to a reduction in the flow sensitivity of the flowmeter.

In traditional single tube flowmeters, the reduction in flow sensitivity is a function of material density. One reason is that as material density changes, the vibration amplitude ratio between the flow tube and the balance bar changes in order to conserve momentum and keep the meter balanced. When the vibration amplitude ratio changes, the lengths of the velocity vectors change. An increase in material density causes the flow tube vibration amplitude to decrease and the balance bar vibration amplitude to increase. Thus, the velocity vectors for the flow tube decrease in length and the velocity vectors for the balance bar increase in length. Since the flow tube velocity vectors have a phase shift due to material flow and the balance bar vectors have none, the changes in length result in a decrease in phase of the sum of the velocity vectors and a decrease in sensitivity of the meter with the increase in material density. As a result, such a meter would have an accurate output of a flow rate of 10 kg/minute for water, but for salt water (higher density) at the same flow rate the output might be only 9.9 kg minute. For a low density material such as kerosine the meter output might be 10.1 kg/minute. These three different flow readings are all for an actual flow rate of 10 kg/minute, but because the meter sensitivity changes with material density, the indicated flow rate changes. Such a meter does not have a flat calibration factor or constant flow sensitivity for materials of different densities. The reason for this is that the flowmeter has a differ ent time delay between its sensors for materials of different densities for the same actual flow rate.

There are other reasons for the flow sensitivity of single tube meters to change with material density. One such reason is that the balance of a single tube flowmeter is extremely difficult to maintain under conditions of differing material density. The above discussion of the change in amplitude ratio between the flow tube and the balance bar assumes that perfect balance is maintained between the two by way of the amplitude ratio shift with material density. When the correct amplitude ratio for perfect balance is not achieved, then momentum is conserved by a shift in the location of the nodes at the ends of the vibrating part of the flow tube. This location shift has the effect of transferring mass from the flow tube to the balance bar (for a higher material density) but it also changes the flow sensitivity. The sensitivity increases as the nodes move in toward the pick off and decreases as the nodes move outwards away from the pick off.

There are also other less understood causes of flow sensitivi ty shift with material density. The cause, however, does not matter. The present invention can negate the change in sensitivity by creating an additional equal and opposite change in sensitivity so that the net change in sensitivity is eliminated.

EPO 831,306A1 discloses a conventional Coriolis flowmeter having a single flow tube surrounded by a concentric balance bar. The balance bar is a cylindrical member having a uniform mass and stiffness distribution except for a weight in the axial center of the balence bar. The only purpose of the weight is to lower the resonant frequency of the balance bar in the drive mode. The weight is of no effect in the second bending Coriolis mode since it is at a zero node of any possible Coriolis response by the balance bar. However, the balance bar is vibrationally inactive at its second bending mode frequency which is far higher than its first bending mode drive frequency.

## Solution

The above and other problems are solved and an advance in the art is achieved by the present invention in accordance with which a method and apparatus for a single tube Coriolis flowmeter is provided having a balance bar that has a phase shift at its velocity sensors that is proportional to material flow rate. Furthermore the balance bar sensitivity to material flow changes with material density in such a manner so as to cancel the flowmeter change in sensitivity. For example, since the prior art flowmeter becomes less sensitive to flow due to amplitude ratio change as material density increases, the balance bar becomes more sensitive to the Coriolis oscillations of the flow tube at a precisely offsetting rate so that the net result is a flowmeter that is insensitive to material density.

Both in the present invention as well as in prior art single tube Coriolis flowmeters, the balance bar is driven out of phase with respect to the flow tube in the first bending mode. The drive frequency is typically the resonant frequency of both the balance bar and the material filled flow tube in the first bending mode of each. In prior art single tube Coriolis flowmeters the balance bar lacks significant response to the Coriolis forces and Coriolis deflections of the flow tube. In the present invention the balance bar is designed so that it responds to the Coriolis forces on the flow tube by bending in its second bending mode.

With material flow, the vibrating flow tube deflects in response to the applied Coriolis forces. The drive vibrations of the flow tube are substantially greater in amplitude than the Coriolis deflections since the drive vibrations occur at the resonant frequency of the material filled flow tube while the Coriolis deflections are at a frequency far from the resonant frequency of the flow tube for the Coriolis deflection mode shape. The Coriolis forces are applied by the flowing material to the flow tube at the same frequency as the drive vibrations. The Coriolis force induced deflection of the flow tube, however, is of the same shape as the second bending mode. The second bending mode resonant frequency of the flow tube is much higher than the frequency of application of the Coriolis force (the drive frequency). Thus, because the Coriolis force induced deflections are at a frequency far removed from the resonant frequency of its mode shape (the second bending), the Coriolis induced deflections in the flow tube are very much smaller than the driver induced (first bending mode) deflections. The small Coriolis deflections in the second bending mode of the flow tube produce the phase delay between the two velocity sensor signals in response to material flow.

The balance bar of the present invention is connected at its ends to the flow tube by means of brace bars which transmit the vibrational forces of the flow tube to the balance bar. In prior art meters the balance bar, like the flow tube, has its second bending mode resonant frequency much higher than the first bending or drive mode. Since the Coriolis deflections of the flow tube are very small and occur at a frequency far removed from the balance bar second bending resonant frequency, the forces transmitted to the balance bar by way of the brace bars result in no significant excitation of the second bending mode of the balance bar. Thus, in prior art meters the flow tube has little response to the Coriolis forces and the balance bar has none.

The present invention involves shifting the frequency order of the various mode shapes of the balance bar. This can be confusing. Vibration modes are defined according to their shapes, not their frequency order. A useful rule is that the mode number is equal to the number of nodes minus one. The first mode has two nodes (at the ends). The second has three (at the ends and in the center). The third bending mode has four nodes, etc.

In accordance with the method and apparatus of the present invention, the second bending mode frequency of the balance bar is lowered so that it is close to the first bending mode (drive frequency) of both the flow tube and the balance bar. The first bending (drive) mode which has large vibration amplitude in both the flow tube and the balance bar, fails to excite the balance bar in the second bending mode because of the difference in mode shapes. In the first bending mode the deflected shape of the balance bar (and flow tube) is such that the ends have no displacement while the length between the ends has increasing displacement with the maximum displacement occurring at the center. In the second bending mode the ends and center have no displacement with the maximum displacements occurring at about the one quarter and three quarter length points. However, the sign of the displacement changes at the center point so that one-half of the balance bar (or flow tube) has positive displacement while the other half has negative displacement. The result of the difference in mode shapes is that while the vibration of the first bending mode is putting energy into one half of the balance bar in the second bending mode, it is taking an equal amount of energy out of the other half of the balance bar. Therefore the net effect is that the second bending mode is not excited by vibration in the first bending mode even though the resonant frequencies may be close.

The Coriolis deflection of the flow tube has the same shape as the second bending mode in that the displacement of the flow tube has an opposite sign on either side of the flow tube center point. Thus, the Coriolis deflection of the flow tube is able to excite the second bending mode of the balance bar via the forces transmitted through the brace bars. In the present invention, the second bending mode resonant frequency of the balance bar is made close to the drive frequency. The excitation of the balance bar second bending mode by the Coriolis deflection of the flow tube becomes sufficient to cause significant phase delay in the balance bar at its velocity sensor locations. This phase delay between the balance bar locations adds to the phase delay between the corresponding flow tube locations, and changes flow sensitivity. This change in sensitivity is used to reduce the effect of changes in material density on the meter's flow sensitivity.

In accordance with a first embodiment of the invention, the second bending mode resonant frequency of the balance bar is below the drive frequency of the flow tube and the balance bar. It is well known that when a mechanical oscillator's resonant frequency is below the exciting frequency, the oscillator moves out of phase to the exciting displacement. As a result, the balance bar assumes a deflection that is out of phase with the Coriolis induced deflection on the flow tube. Because the balance bar's excitation source for its second bending mode is the Coriolis deflections of the flow tube, the vibration amplitude of the balance bar's second bending mode deflections increase as the Coriolis force on the flow tube increases. These out of phase Coriolis deflections of the flow tube and second bending mode deflections of the balance bar are additive and permit a velocity sensor coupled to the flow tube and balance bar to generate output signals of increased phase delay (sensitivity) compared to that of prior art single tube Coriolis flowmeters.

The excitation of the second bending mode of the balance bar by the Coriolis deflection of the flow tube is a function of the separation between the excitation frequency (drive frequency) and the resonant frequency of the balance bar in its second bending mode. Small frequency separation results in greater balance bar second bending vibration amplitude for a given flow rate than does a larger frequency separation. The drive frequency changes with changes in material density because the flow tube contains the flowing material while the balance bar's second bending resonant frequency remains relatively constant. Thus the separation between the drive frequency and the balance bar second resonant frequency changes with material density and causes the balance bar's sensitivity to the Coriolis oscillations of the flow tube to change with material density. When the balance bar's second bending mode resonant frequency is below the drive frequency, increases in material density cause the drive frequency to decrease and the frequency separation to decrease with a resultant increase in sensitivity of the balance bar to material flow. By properly sizing the frequency separation, the increase in the balance bar's sensitivity with material density can precisely counter the meter's decrease in sensitivity due to the drive mode vibration amplitude ratio change.

The reduction of the second bending mode frequency of the balance bar below the drive frequency is achieved by a physical re-design of the balance bar that includes a redistribution of its mass and stiffness. Mass is removed from the central portion of the balance bar which tends to raise the drive frequency while having little impact on the second bending mode frequency. The mass removal has little impact on the second bending mode frequency because the second bending mode has little amplitude near the center. Mass is then added to the balance bar near the velocity sensor locations. This lowers the second bending mode frequency more than the drive frequency because these are the locations where the second bending mode vibration amplitude is greatest.

Balance bar stiffness is modified by greatly softening it in the regions of high bending in the second bending mode. These locations are slightly toward the center from the velocity sensor locations. Removing stiffness in these areas greatly reduces the second bending mode frequency while having little effect on the drive frequency since in the drive mode there is little bending in these areas. Finally, stiffness in the central section of the balance bar, between the soft areas, is increased to further raise the drive frequency while having little effect on the second bending frequency.

These physical modifications of the balance bar along with subsequently described changes can reduce its second bending mode frequency so that it is lower than its first bending mode (drive) frequency. When this is achieved, the Coriolis vibrations of the flow tube are transmitted from the flow tube through the brace bars to the ends of the balance bar. This induces the Coriolis like deflections in the balance bar that are out of phase with the Coriolis deflections of the flow tube. These deflections are referred to as "Coriolis like" in that they assume a mode shape that is similar to that of a flow tube being deflected by Coriolis force. The flow tube and balance bar of the present invention thus perform as a dual tube Coriolis flowmeter wherein each of the flow tubes assumes a Coriolis vibratory response that is out of phase with respect to the other flow tube. The result is that the single tube meter of the present invention can have the flow sensitivity of a dual tube meter. Furthermore, because the change in sensitivity due to change in material density is countered by the change in sensitivity of the balance bar, the single tube meter of the present invention has a flow sensitivity that is constant and independent of material density.

The phase of the balance bar second bending mode vibration with respect to the phase of the Coriolis deflection of the flow tube depends upon the relationship of the resonant frequency of the balance bar second bending mode to the first bending mode (drive) frequency in the present invention. The second bending mode resonant frequency can either be less than, or greater than the first bending mode (drive) frequency. If the second bending mode resonant frequency is higher than the drive frequency, the balance bar second bending mode vibrates in phase with the Coriolis induced vibration of the flow tube. This tends to reduce sensor phase shift and flowmeter sensitivity, but it can still be used to make the meter insensitive to changes in material density.

Flowmeter sensitivity is reduced when the second bending mode frequency is above the first bending mode drive frequency. The reason for this is that the flow tube's Coriolis vibration and the balance bar's second bending mode vibration are in phase. The velocity sensors sense relative velocity between the flow tube and balance bar which means that in phase motions tend to negate each other. This however, can still be a useful embodiment for making a meter with a flow sensitivity that is independent of changes in material density. If the balance bar second bending mode resonant frequency is above the drive frequency, an increasing material density lowers the drive frequency and increases the spacing between the two frequencies. This lowers the response of the balance bar to the Coriolis forces. But, because the balance bar's in phase response negates (is subtracted from) the Coriolis response of the flow tube, the lowered response of the balance bar results in an increased flow sensitivity of the meter. This increased flow sensitivity with increasing material density is once again capable of canceling the decrease in flow sensitivity caused by the change in vibration amplitude ratio between flow tube and balance bar. As in the other embodiment, in order for the balance bar change in flow sensitivity to precisely cancel the change in sensitivity caused by the drive mode vibration amplitude ratio, it is necessary to have the proper frequency separation between the two modes. How this proper separation is determined is discussed later.

EP 0 831 306A1 describes a Coriolis flowmeter similar in so me respects to that of the present application. FIG. 1 shows the arrangement with concentric balance bar, and FIG. 6 that with a parallel mounted balance bar. In both cases, the balance bar has a centrally mounted weight, for equalising the natural frequencies of the flow tube and balance bar. There is no specific indication that such a structure is any significant communication of vibration from the Coriolis flow tube to the balance bar through the brace bars so as to induce vibrations in the balance bar. The present invention provides an improved meter with enhanced sensitivity. This is achieved in two main embodiments both of which involve the use of a balance bar having a non-uniform mass and stiffness distribution along its length. In the embodiment of FIG. 7, the arrangement is such that the resonant frequency of the balance bar is below that of the Coriolis deflections of the flow tube, whereas in the embodiment of FIG. 8, the balance bar frequency is above that of the Coriolis deflections of the flow tube. This has an effect oh the Coriolis vibrations of the flow tube.

In summary, the method and apparatus of the Coriolis flowm eter of the present invention includes a balance bar whose physical characteristics permit it to have a second bending mode resonant frequency that is near to its first bending mode (drive) frequency. This permits the balance bar to respond to the Coriolis deflections of the flow tube by producing Coriolis like deflections of its own. If the balance bar second bending mode resonant frequency is below the drive frequency, then its Coriolis force induced vibrations are out of phase with the Coriolis deflections of the flow tube. This increases the meter sensitivity and produces a flowmeter with a sensitivity to flow that is independent of changes in material density. If the balance bar second bending mode resonant frequency is above the drive frequency, then its Coriolis force induced vibrations are in phase with the Coriolis deflections of the flow tube. This decreases the sensitivity of the meter, but can also produce a flowmeter with a sensitivity to flow that is independent of material density.

An aspect of the invention is a method of operating a Coriolis flowmeter having a flow tube and a balance bar oriented substantially parallel to said flow tube; said method comprising the steps of:

flowing material through said flow tube;
vibrating said flow tube and said balance bar at a drive mode frequency substantially equal to the resonant frequency of said balance bar and said flow tube with material flow whereby periodic Coriolis deflections are induced at said drive mode frequency in said vibrating flow tube as a result of the flow of material through the vibrating flow tube, said periodic Coriolis deflections being characterized by regions of deflection as well as nodes having no deflection;
said drive mode frequency being dependent upon the density of said material flow and changing inversely with a change in density of said material flow;
detecting the relative velocity of said flow tube with respect to said balance bar to generate signals representing said periodic Coriolis deflections of said flow tube; and deriving information regarding said flowing material in response to the generation of said signals, said signals having an amplitude that changes with density;

characterized in that said balance bar has a non-uniform mass and stiffness distribution along its length such that the resonant frequency of said balance bar in a vibration mode having the same number of nodes as the periodic Coriolis deflections of said flow tube is proximate the frequency of the periodic Coriolis deflections of said flow tube;

Coriolis like deflections are induced in said balance bar at the drive mode frequency in response to said Coriolis deflections of said flow tube, said Coriolis like deflections of said balance bar having the same number of nodes as the periodic Coriolis deflections of said flow tube and representing a Coriolis like vibration mode for which the resonant frequency of said balance bar is proximate the frequency of said periodic Coriolis deflections of said flow tube, said Coriolis like deflections of said balance bar having an amplitude proportional to the magnitude of said periodic Coriolis forces on said vibrating flow tube with material flow; and said generated signals representing said periodic Coriolis deflections of said flow tube are generated with respect to said Coriolis like deflections of said balance bar, said Coriolis like deflections thereby altering the amplitude of said signals;

said Coriolis-like deflections of said balance bar having a vibration amplitude that is a function of the Coriolis deflections of the flow tube as well as the difference between said drive mode frequency and said resonant frequency of said Coriolis-like mode of vibration of said balance bar;

a change in the drive mode frequency causes a change in the frequency separation between said drive mode frequency and the resonant frequency of said Coriolis like vibration mode;

a change in said frequency separation changes the amplitude of said Coriolis like deflections; and

a change in amplitude of said Coriolis like deflections with density negates the change in amplitude of said Coriolis deflections with density and results in a flow sensitivity magnitude that is independent of changes in density of said flowing material.

Another aspect includes operating said flowmeter to respond to a change in density of said material flow to alter the ratio between the drive mode vibration amplitude of said flow tube and said balance bar to change the flow sensitivity magnitude of said flowmeter in a first direction and further to alter the ratio between the Coriolis deflection amplitude of said flow tube and the Coriolis like deflection amplitude of said balance bar to change the flow sensitivity magnitude of said flowmeter in a second direction opposite to said first direction;

said changes in said flow sensitivity magnitude of said flowmeter in said first direction and in said second direction being effective to achieve a flowmeter flow sensitivity magnitude that is substantially independent to changes in material flow density.

Another aspect is that said Coriolis like deflections of said balance bar have a vibration amplitude that changes inversely with the magnitude of the separation of said drive mode frequency from the resonant frequency of said Coriolis like mode of vibration of said balance bar; said method further including;

altering the flow sensitivity magnitude of said flowmeter in a first direction in response to a change in the ratio of the drive mode vibration amplitude of said flow tube and balance bar resulting from said change in said density of said material flow;

altering the ratio between said Coriolis deflection amplitude of said flow tube and the amplitude of said Coriolis-like deflection of said balance bar in response to said change in drive mode frequency resulting from said change in density of said material flow to alter the flow sensitivity magnitude of said flowmeter in a second direction opposite to said first direction;

said changes in said flow sensitivity magnitude in said first direction and in said second direction being effective to achieve a substantially constant flow sensitivity magnitude of said flowmeter over a range of material flow densities;

Another aspect includes the step of inducing Coriolis like deflections in said balance bar with said Coriolis like vibration mode having a resonant frequency less than said drive frequency; said Coriolis like deflections of said balance bar being out of phase with said periodic Coriolis deflections of said flow tube.

Another aspect includes the step of inducing Coriolis like deflections in said balance bar with said Coriolis like vibration mode having a resonant frequency greater than said drive frequency; said Coriolis like deflections of said balance bar being in phase with said periodic Coriolis deflections of said flow tube.

Another aspect is that said Coriolis like deflections are induced in said balance bar by:

flexing ends of said flow tube in response to said periodic Coriolis deflections to flex a first end of brace bar means; and
flexing a second end of said brace bar means in response to said flexing of said first end to induce said Coriolis like deflections in said balance bar.

Another aspeot comprises the step of transferring the effective spring of said balance bar from said balance bar to said brace bar means to lower a second bending mode resonant frequency of said balance bar.

Another aspect comprises the step of lowering the resonant frequency of said Coriolis like vibration mode of said balance bar by lowering the effective spring of said balance bar.

Another aspect comprises the step of lowering the resonant frequency of said Coriolis like vibration mode of said balance bar by the provision of at least one flexible portion of said balance bar together with the provision of increased mass on at least one other portion of said balance bar as well as the provision of a void in at least one portion of said balance bar.

Another aspect comprises the step of lowering the resonant frequency of said Coriolis like vibration mode of said balance bar by the provision of flexible portions of said balance bar at locations of high bending moment of said balance bar for said Coriolis like deflections.

Another aspect comprises the step of maintaining the end nodes of said vibrating flow tube and said balance bar in brace bar means coupling said flow tube and said balance bar.

Another aspect is that said step of maintaining comprises the provision of stiff sections of said balance bar and flexible sections of said balance bar not comprising a stiff section.

Another aspect is that said drive mode comprises a first bending mode and wherein said Coriolis like deflections comprises the second bending mode of said balance bar.

Another aspect includes the step of lowering the frequency of said second mode of vibration of s aid balance bar by the provision of a center portion of said balance bar and a flexible portion on each side of said center portion of said balance bar together with the provision of increased mass on each side of said center portion.

Another aspect includes the said step of lowering said resonant frequency of said second bending mode of said balance bar by the provision of flexible portions of said balance bar at locations of high bending moment of said balance bar and increased mass at locations of high vibrational amplitude in said second bending mode.

Another aspect comprises a Coriolis flowmeter having a flow tube adapted to receive a material flow, a balance bar oriented substantially parallel to said flow tube and brace bar means coupling said flow tube with said balance bar; said Coriolis flowmeter further comprising:

driver means arranged to vibrate said flow tube and said balance bar in phase opposition in a drive mode having a frequency substantially equal to the resonant frequency of the material filled flow tube and said balance bar such that periodic Coriolis defections will be induced at said drive frequency in said vibrating flow tube when said material is flowing through it, said periodic Coriolis deflections being characterized by regions of deflections as well as nodes having no deflection;
said drive mode frequency being dependent upon the density of said material flow and changing inversely with a change in density of said material flow;
means for detecting the velocity of said flow tube with respect to said balance bar for generating signals representing said periodic Coriolis deflections of said flow tube; said signals have an amplitude that changes with density;

means for deriving material flow information in response of generation of said signals;

characterized in that said balance bar has a structure providing a non-uniform mass and stiffness distribution along the length of said balance bar such that the resonant frequency of said balance bar in a vibration mode having the same number of nodes as the periodic Coriolis deflections of said flow tube is proximate the frequency of the periodic Coriolis deflections of said flow tube, whereby Coriolis like deflections will be Coriolis like in said balance bar at the drive mode frequency in response to said Coriolis deflections of said flow tube, said Coriolis like deflections of said balance bar having the same number of nodes as the periodic Coriolis deflections of said flow tube and representing Coriolis like vibration mode for which the resonant frequency of said balance bar is proximate the frequency of said periodic Coriolis deflections of said flow tube, said Coriolis like deflections of said balance bar having an amplitude proportional to the magnitude of periodic Coriolis forces of said vibrating flow tube with material flow;

said Coriolis like deflections define an Coriolis like mode of vibration of said balance bar having a resonant frequency sufficiently close, but not equal, to said drive mode frequency to vary said amplitude of said Coriolis like defections in response to a variation in said drive mode frequency; said Coriolis like deflections thereby altering the amplitude of said signals;

said Coriolis-like deflections of said balance bar having a vibration amplitude that is a function of the Coriolis deflection of the flow tube as well as the difference between said drive mode frequency and said resonant frequency of said Coriolis-like mode of vibration of said balance bar;

said signal generating means generates said signals representing said periodic Coriolis deflections of said flow tube with reference to said Coriolis like deflections of said balance bar, thereby altering the amplitude of said generated signals;

a change in the drive mode frequency causes a change in the frequency separation between said drive mode frequency and the resonant freduency of said Coriolis like vibration mode;

a change in said frequency separation changes the amplitude of said Coriolis like deflections; and

a change in amplitude of said Coriolis like deflections with density negates the change in amplitude of said Coriolis deflections with density and results in a flow sensitivity magnitude that is independent of changes in density of said flowing material.

Another aspect includes means for operating said flowmeter to respond to a change in density of said material flow to alter the ratio between the drive mode vibration amplitude of said flow tube and said balance bar to change the flow sensitivity magnitude of said flowmeter in a first direction;

means responsive to a change in said drive mode frequency resulting from said change in density of said material flow to alter the ratio between the Coriolis deflection amplitude of said flow tube and the Coriolis-like deflection amplitude of said balance bar to change the flow sensitivity magnitude of said flowmeter in a second direction opposite to said first direction;

said changes in said flow sensitivity magnitude of said flowmeter in said first direction and in said second direction being effective to achieve a substantially constant flowmeter flow sensitivity magnitude that is substantially independent of changes in material flow density.

Another aspect includes means responsive to a change in density of said material flow to alter flow sensitivity magnitude of said flowmeter in a first direction in response to a change in the drive mode vibration amplitude ratio of said flow tube and balance bar;

means responsive to a change in said density to alter said drive mode frequency;

means to alter flow sensitivity magnitude of said flowmeter in a second direction opposite to said first direction in response to a change in the ratio of said Coriolis deflection amplitude of said flow tube to the Coriolis like deflection amplitude of said balance bar resulting from a change in drive mode frequency;

said changes in said flow sensitivity magnitude in said first direction and in said second direction being effective to achieve a substantially constant material flow sensitivity magnitude of said flowmeter.

Another aspect is that said means for vibrating said balance bar includes means for inducing said Coriolis like deflections in said balance bar at said drive frequency with the resonant frequency of said Coriolis like vibration mode being greater than said drive mode frequency and said Coriolis like deflections of said balance bar being in phase with said periodic Coriolis deflections of said flow tube.

Another aspect is that said means for inducing said Coriolis like deflections in said balance bar extends forces indicative of said periodic Coriolis defections from said at least one flow tube through said brace bar to said balance bar to induce said Coriolis like deflections in said balance bar.

Another aspect includes means for lowering the resonant frequency of said Coriolis like vibration mode of said balance bar to a value less than that of said drive mode frequency and said Coriolis like deflections of said balance bar being out of phase with said periodic Coriolis deflections of said flow tube.

Another aspect is that said means for lowering comprises added mass in said balance bar in regions of high vibrational amplitude in said Coriolis like vibration mode and comprises flexible portions of said balance bar at locations of high bending moment in said Coriolis like vibration mode.

Another aspect is that said drive mode comprises a first bending mode and wherein said Coriolis like vibration mode comprises a second bending mode.

Another aspect is that said means for lowering further comprises a rigid center portion of said balance bar and an added mass on each side of said rigid center portion and wherein said means for lowering further comprises flexible portions of said balance bar at locations on either side of said rigid center portion.

Another aspect is that said means for lowering further comprises a void in said center portion for raising said drive frequency.

Another aspect is that said flexible portion comprises bellows.

Another aspect comprises means for reducing the effective spring of said balance bar to reduce the resonant frequency of said Coriolis like vibration mode of said balance bar.

Another aspect comprises means for concentrating the effective spring of said at least one flow tube and said balance bar in said brace bar.

Another aspect is that said means for concentrating comprises stiff members on said balance bar and flexible members comprising each portion of said balance bar not comprising a stiff member.

Another aspect is that the end node of said flow tube and balance bar is maintained in said brace bar.

Another aspect includes a substantially straight flow tube and a substantially straight balance bar.

Another aspect includes a flow tube having a curved portion and a balance bar having a curved portion.

Another aspect is that said Coriolis like deflections comprise the second bending mode of said balance bar.

## Description of the Drawings

The above and other advantages of the features of the inven tion may be better understood from a reading of the following detailed description thereof taking in conjunction with the drawings in which;

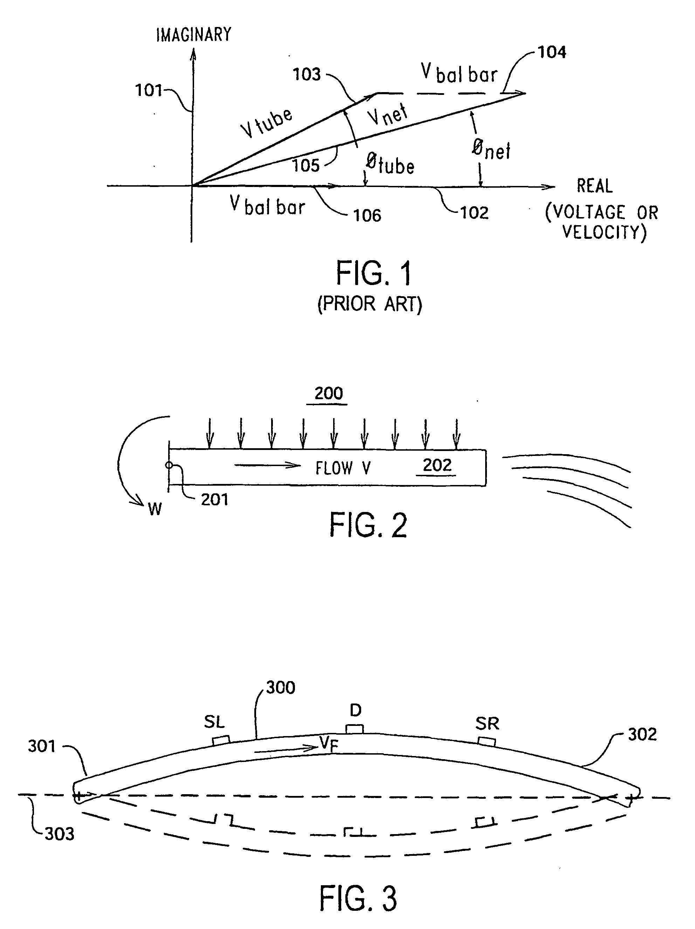

Figure 1 is a vector diagram of a prior art single tube Coriolis flowmeter.

Figure 2 discloses a rotating flow tube.

Figure 3 discloses a vibrating flow tube.

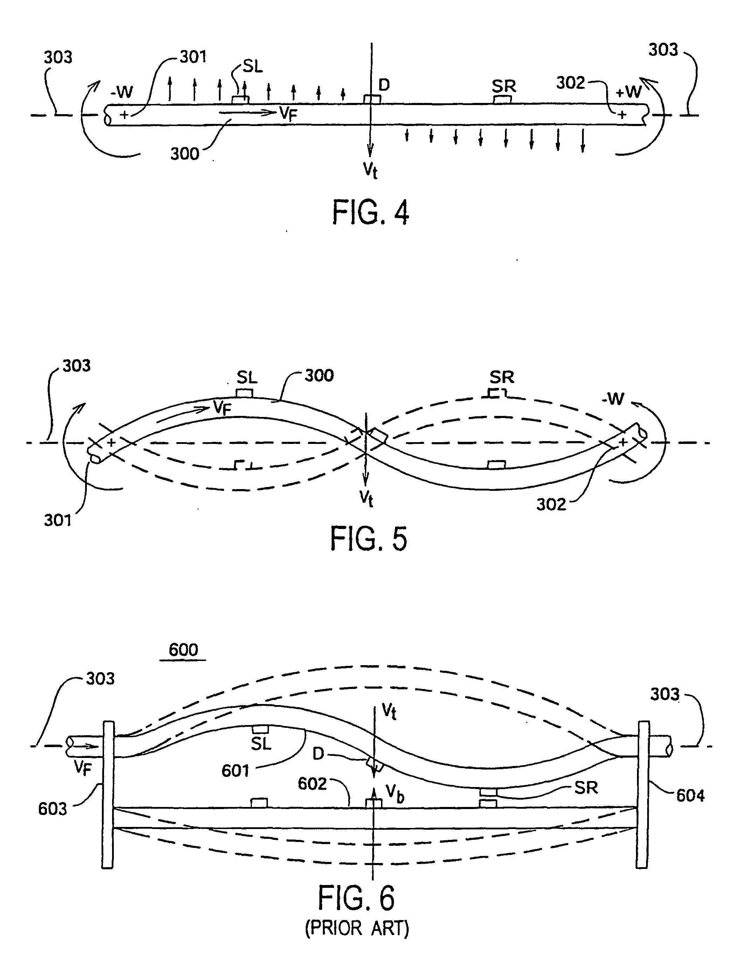

Figure 4 discloses the Coriolis forces applied to the flow tube of Figure 3.

Figure 5 discloses the Coriolis response of the flow tube of Figure 3.

Figure 6 discloses a prior art straight tube Coriolis flowmeter

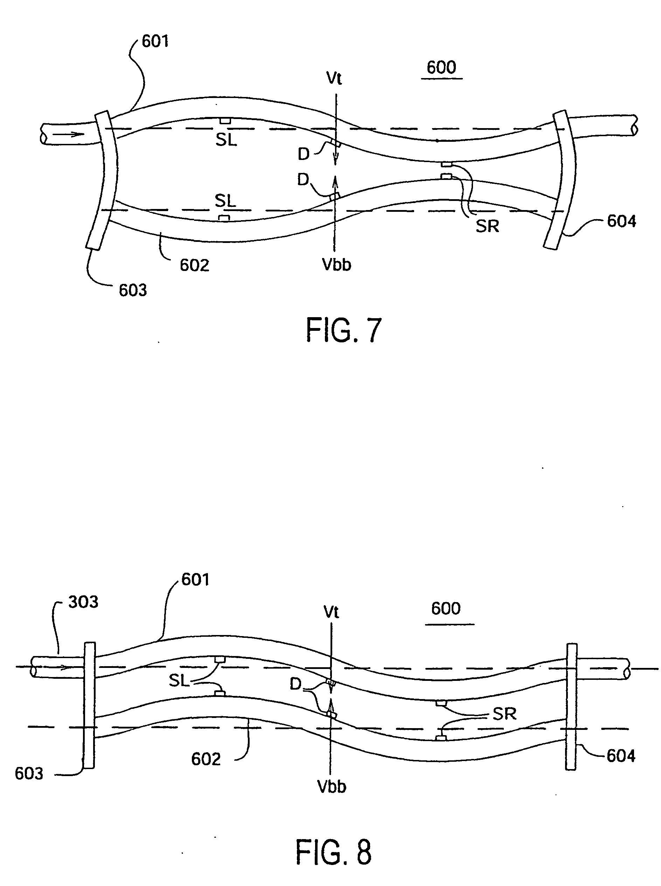

Figures 7 and 8 disclose the Coriolis vibrational characteristics of a single tube Coriolis flowmeter of the present invention.

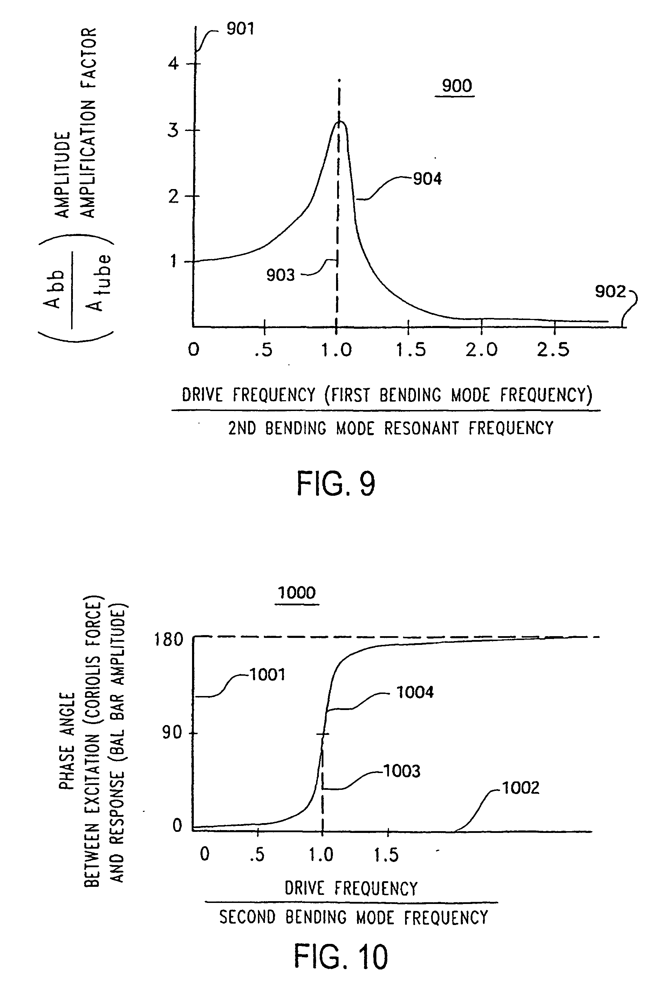

Figures 9 and 10 disclose frequency response curves of the flowmeter of the present invention.

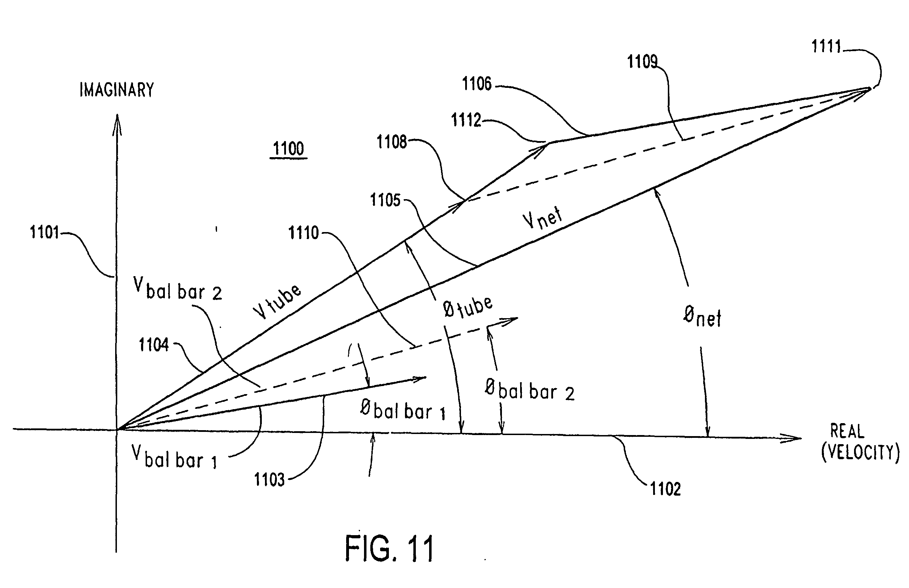

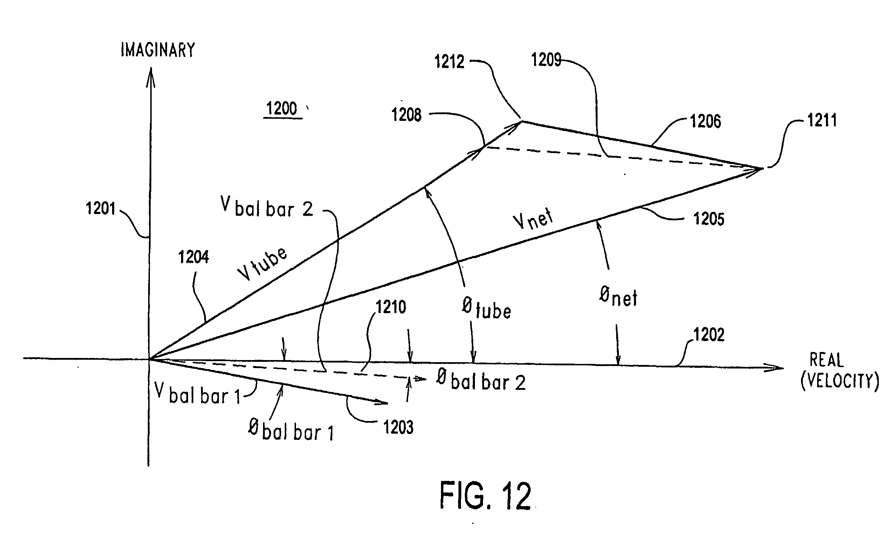

Figures 11 and 12 are vector diagrams of the single tube Coriolis flowmeter of the present invention.

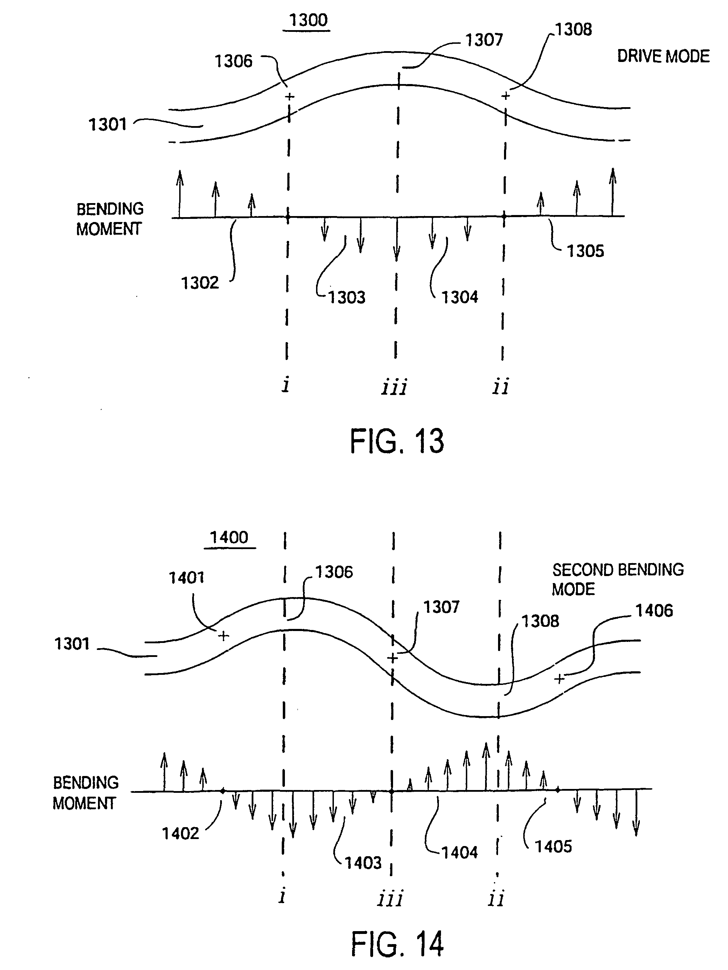

Figures 13 discloses the mode shape and bending moments of the first bending mode of the balance bar of the present invention.

Figures 14 discloses the mode shape and bending moments of the second bending mode of the balance bar of the present invention.

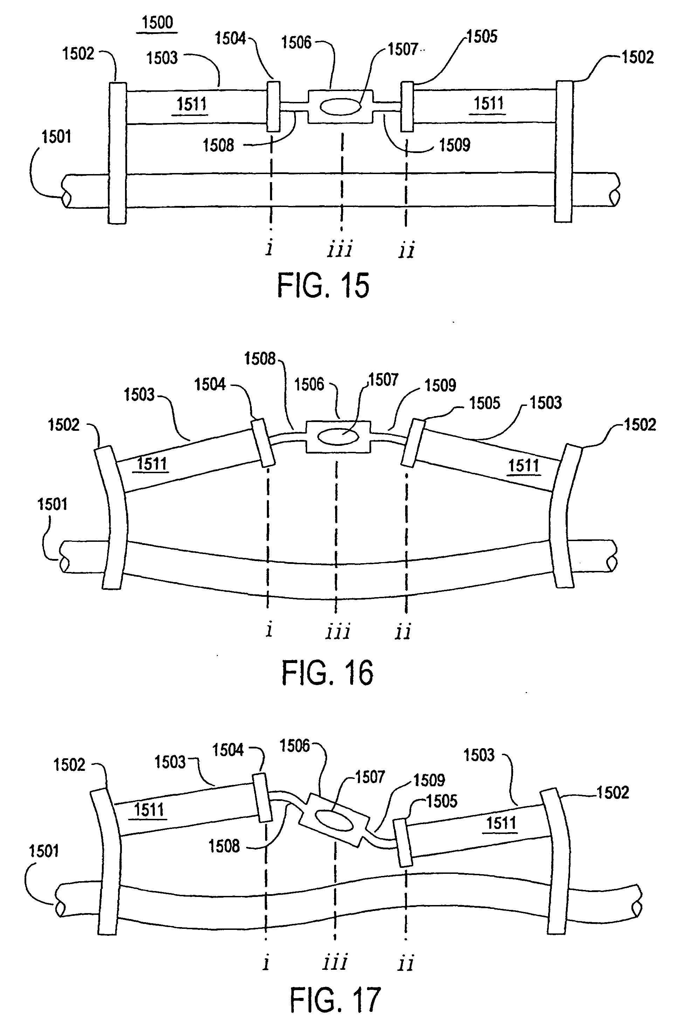

Figure 15 discloses an embodiment of the present invention.

Figures 16 and 17 disclose the vibrational response characteristics of the Coriolis flowmeter of Figure 15.

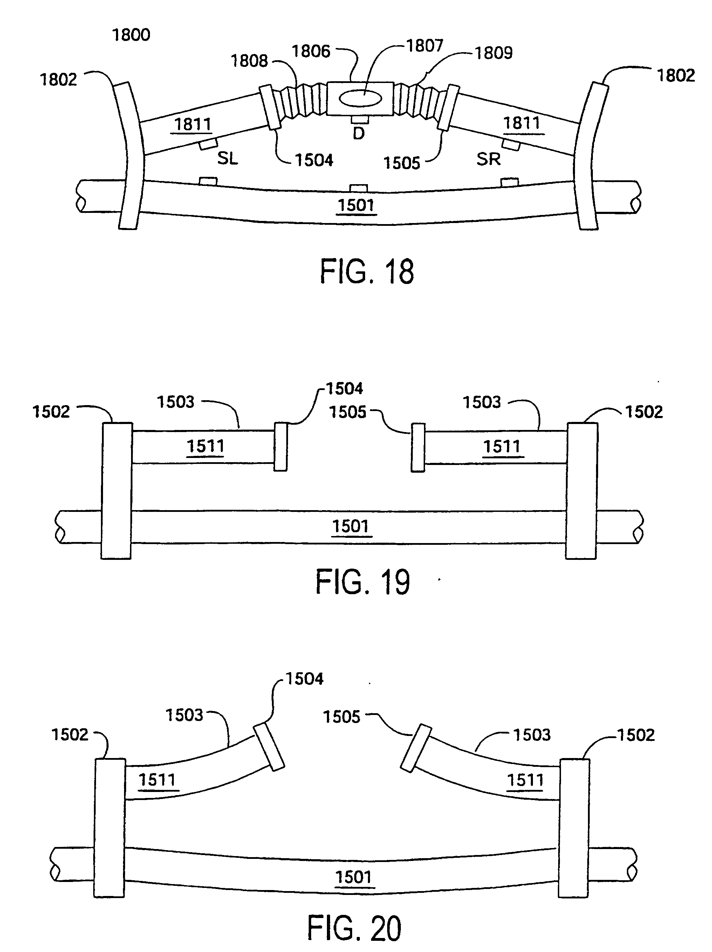

Figure 18 discloses an alternative embodiment of the Coriolis flowmeter of the present invention.

Figures 19, 20 and 21 disclose the vibrational characteristics of a conceptual straight tube Coriolis flowmeter.

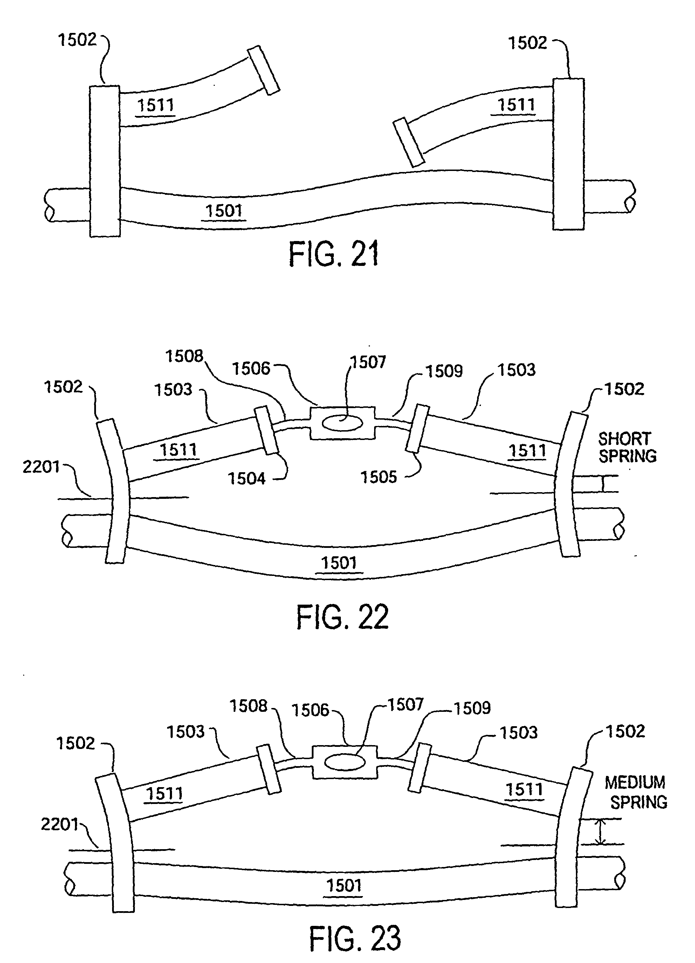

Figures 22, 23 and 24 disclose vibrational characteristics of one possible straight tube Coriolis flowmeter of the present invention.

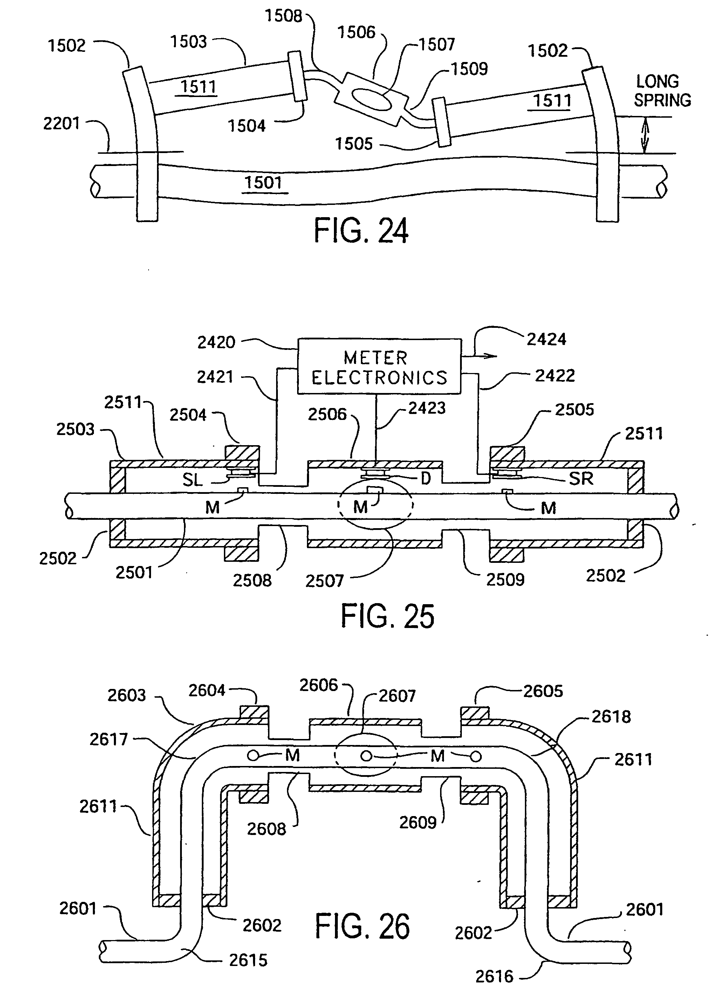

Figure 25 discloses an alternative embodiment of a Coriolis straight tube flowmeter of the present invention.

Figure 26 discloses a Coriolis flowmeter embodying the present invention and having a curved flow tube and surrounding balance bar.

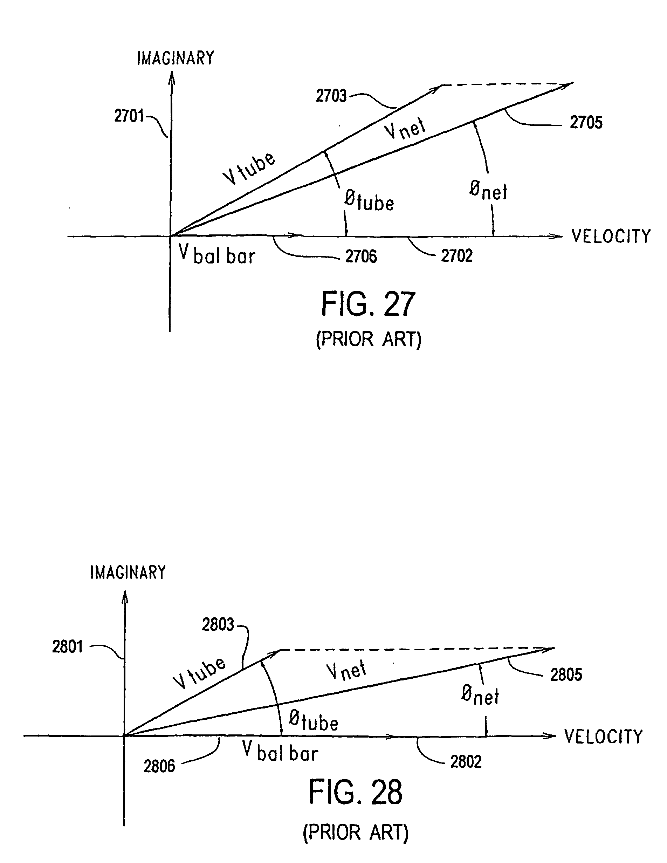

Figures 27 and 28 are vector diagrams illustrating the operation of a prior art flowmeter for different material densities.

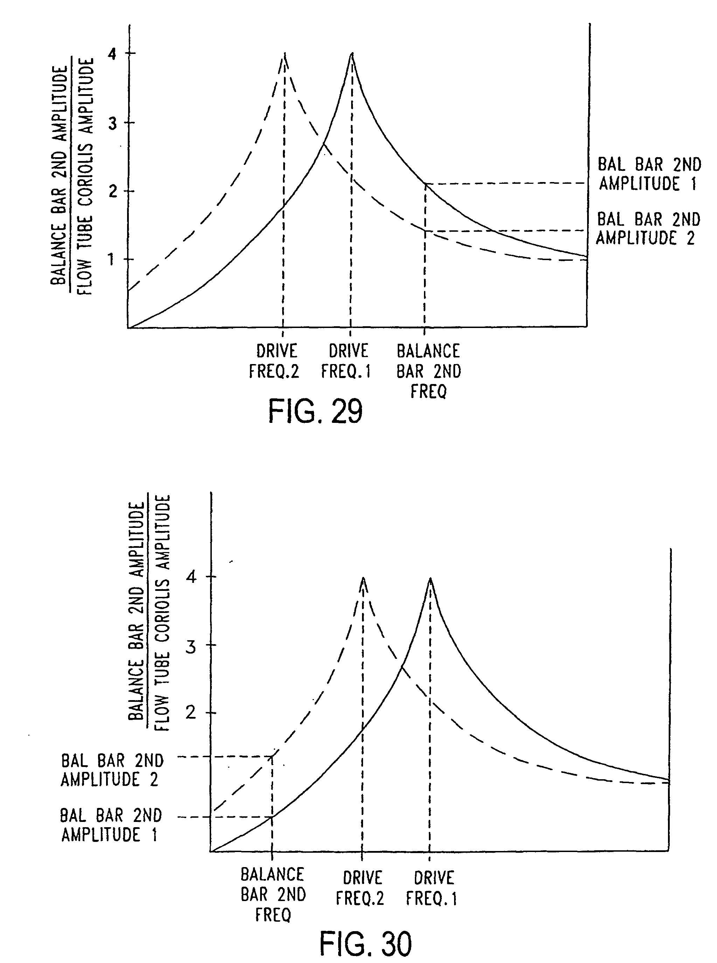

Figures 29 and 30 illustrate the relationship between the balance bar second vibrational amplitude and the flow tube Coriolis amplitude with respect to different drive frequencies.

## Detailed Description

The method and apparatus of the present invention overcomes the problem of changes in flow sensitivity resulting from changes with material density in single tube flowmeters by the provision of a balance bar that actively responds to the Coriolis deflections of the flow tube. The balance bar response varies with changes in material density in such a way as to counter the change in sensitivity with density of prior single tube meters. In order to understand how this is done it is necessary to understand the nature of the Coriolis force on the flow tube, the distortion this produces in the flow tube, and how the distortion results in phase shift along the flow tube.

Figure 1 is later described and is a vector diagram of the vibrational velocities of the flowmeter of Figure 6.

Figure 2 shows a tube 202 through which material is flowing as it rotates counterclockwise about its end 201. The Coriolis force per unit length of tube 202 can be derived from the equation for Coriolis acceleration $A_c$ and Newton's law.

Coriolis acceleration may be expressed as:

$$A_c = 2\,(\bar{\omega}\ x\ \bar{v})$$

$\omega$ = angular velocity
$v$ = material velocity
Coriolis Force $F_c$ may be expressed as:

$$F_c = MA_c = 2M\,(\bar{\omega}\ x\ \bar{v})$$

$M$ = material mass
$\rho$ = material density
since material $M = \rho A_t\,\ell$
$A_t$ = tube flow area
$\ell$ = tube length

$$F_c = 2\rho A_t\ell(\bar{\omega}\ x\ \bar{v})$$

$$\frac{F_c}{\ell} = 2\rho A_t(\bar{\omega}\ x\ \bar{v})$$

but:

$$\rho A_t\bar{v} = \dot{M}$$

$\dot{M}$ = mass flow rate

$$\frac{F_c}{\ell} = 2\ \dot{M}\ x\ \bar{\omega}$$

The Coriolis force $F_c$ is uniform along the length of tube 202 because each part of tube 200 is rotating at the same rate and the mass flow rate is the same throughout the flow tube.

Figure 3 shows a straight flow tube 300 that is free to pivot about each end 301 and 302 but is fixed in translation at ends 301 and 302. Flow tube 300 is vibrated by driver D in the first bending mode at its resonant frequency, like a guitar string, while material flows through it. As the flow tube passes through its straight (zero displacement) position 303 downwards, it's left half rotates clockwise while its right half rotates counterclockwise. The rotations decrease as the tube's center is approached. The center does not rotate but merely translates. The spacial distribution of Coriolis forces on the flow tube 300 as it passes through zero displacement 303 is shown on Figure 4. The Coriolis force is in opposite directions on the two halves because the tube rotation directions are opposite. The Coriolis force diminishes to zero at the center because the rotation of the tube diminishes to zero at the center.

Another major difference between vibrating tube 300 of Figure 3 and the rotating tube 202 of Figure 2 is that vibrating tube 300 does not rotate continuously, but stops and reverses direction. At the vibration direction reversal, the rotations are zero and the Coriolis force on the entire flow tube is zero. The result is that the magnitude of the Coriolis forces of Figure 4 vary sinusoidally with time with the maximum occurring as the flow tube vibration goes through zero amplitude and maximum velocity as shown on Figure 4. Zero Coriolis force occurs on the entire flow tube as the flow tube reaches its maximum vibration amplitude and zero velocity in the first bending (drive) mode. The frequency of the sinusoidal application of the Coriolis force to the flow tube is the same as the frequency at which it is being vibrated; namely, the flow tube's first bending (drive) mode vibration frequency.

Flow tube 300 bends in response to the periodic Coriolis force as shown in Figure 5. The solid line shows the shape (greatly exaggerated) the tube takes in response to the Coriolis force as the tube passes downward through zero displacement in the drive mode. The dashed line shows the shape the tube takes as it moves upward through zero displacement in the drive mode. Note that the only point on the flow tube that is in fact passing through zero at this instant is the mid point of the tube. The shape of Figure 5 is similar to the second bending mode shape. However, this is just a coincidence. The frequency of the second bending mode of the flow tube is much higher than the frequency at which the Coriolis force of Figure 4 is applied (the frequency of the first bending mode). Since the flow tube is being excited by Coriolis forces at well below its second bending resonant frequency, this Coriolis caused deformation of Figure 5 and the Coriolis force of Figure 4 occur in phase with each other. Flow tube 300 therefore assumes the shape of Figure 5 as it crosses zero displacement axis 303 in its driven vibration (first bending) mode. Material flow superimposes the Coriolis induced vibration of Figure 5 on the driven vibration of Figure 3. This is shown on Figure 6. Both vibrations occur at the first bending mode drive frequency; but they are phase shifted from each other by ninety degrees. The Coriolis induced displacement maximum (solid lines) occurs when the first bending mode is at zero displacement along axis 303. The Coriolis displacement becomes zero when the first bending mode is at maximum displacement (dashed lines). Figure 6 is analogous to Figure 4 in that it represents the state of the flow tube in so far as Coriolis deflections are concerned at the time flow tube 300 crosses zero axis 303. At this time, and at this time only, the Coriolis forces and Coriolis induced deflections are at a maximum amplitude. As already explained for Figure 4, the Coriolis forces diminish and ultimately become zero when the deflection of flow tube 300 reaches its maximum in either an upwards or downward direction. At this time, the velocity of the flow tube is zero and so are the applied Coriolis forces and resultant Coriolis deflection. Thus, the sinusoidal Coriolis response shown in Figure 5 varies sinusoidally in amplitude at the drive frequency as flow tube 300 is vibrated sinusoidally in its first bending mode between its maximum positive and negative deflection by the drive signal. The amplitude of the Coriolis displacement shown on Figures 5 and 6 is greatly exaggerated for clarity. The amplitude is in reality much less than the amplitude of the first bending mode of flow tube 300 because the first bending mode is driven at the resonant frequency of the flow tube and the Coriolis mode is not. Thus, the Coriolis deformations shown in all the figures are greatly exaggerated.

The phase delay associated with material flow in prior art meters is the result of the superposition of the first bending (drive) mode and the Coriolis deflection of the flow tube. In Figure 5 it can be seen that right velocity sensor SR crosses zero displacement before left velocity sensor SL. It can be said that the left sensor and its output voltage lag the phase of the right sensor and its output voltage. Conversely, it can also be said that the right sensor SR leads the phase of the left sensor SL. The phase difference (or time delay) is proportional to the amplitude of the Coriolis induced displacement which is, in turn, proportional to the mass flow rate.

The present invention involves shifting the frequency order of the various mode shapes of the balance bar. The vibration modes are defined according to their shapes, not their frequency order. The first bending mode will hereafter be referred to as that shown in Figure 3. The second bending mode will be of the shape shown in Figure 5. A useful rule is that the mode number is equal to the number of nodes minus one. The first mode has two nodes (at the ends). The second has three (at the ends and in the center). The third bending mode has four nodes, etc.

In conventional single tube Coriolis flowmeters, the balance bar only vibrates in the first bending mode and lacks any response to Coriolis forces on the flow tube. Figure 6 shows a prior art single tube Coriolis flowmeter 600 having a flow tube 601 and a balance bar 602 connected by brace bars 603 and 604 at the ends of balance bar 602. The solid lines of Figure 6 shows flow tube 601 and balance bar 602 as they cross zero displacement axis 303 in the first bending (drive) mode with material flow. No Coriolis deflections appear on balance bar 602 on Figure 6. The dashed lines show the flow tube and balance bar at the outward extent of their vibration in the first bending (drive) mode.

Figure 1 is a vector diagram disclosing the vibrational velocities generated by the conventional single straight tube Coriolis flowmeter as represented in Figure 6. The response of the flow tube at the right velocity sensor SR is vector 103 which has a leading phase, $\phi$ tube, represented by the angle between vector 103 and the real axis 102. The length of vector 103 represents its peak velocity (or vibration amplitude since they are proportional). Its projection on the X-axis represents its instantaneous velocity. Vector 106 of the balance bar is not shifted in phase from axis 102 since the balance bar is not affected by the generated Coriolis forces on the flow tube. The balance bar vector 106 is shown along the real axis 102 and is entitled $V_{Bal\ bar}$. The vector sum of the flow tube and balance bar vectors is vector 105 which has a phase angle $\phi_{net}$ representing the combined vector amplitudes and phases of the flow tube and balance bar. Note that the net phase angle out of the right sensor SR is less than the phase angle for the tube alone. The reduction in phase angle (and meter sensitivity) is due to the lack of phase shift of the balance bar in conventional single tube meters.

Figures 27 and 28 are vector diagrams for a prior art meter having different amplitude ratios due to a change in material density. A comparison between the two diagrams would normally be meaningless because the density difference results in a shift in drive frequency as well as flow tube phase. Therefore, the phase angles have all been "normalized" for frequency. What this means is that the phases have been divided by the tube frequency. The normalized phase angles are in reality time delay. Since Coriolis force and thus phase angle is proportional to tube frequency, the normalized phase angles of the flow tubes are independent of tube frequency. The normalized phase angle of the flow tube of Fig.27 is therefore equal to the normalized phase angle of Fig. 28 for the same flow rate and comparisons become meaningful. Figure 27 is a vector diagram for a flow meter having a relatively large flow tube vector 2703 and a relatively small balance bar vector 2706 as results from a material having a low material density. The flow tube vector has a normalized phase of $\phi_{tube}$ with respect to the X-axis 2702 while the balance bar vector 2706 lies along the X-axis 2702 and has a phase angle of zero. The vector sum of vectors 2703 and 2706 is vector 2705 having a velocity of $V_{net}$ and having a normalized phase angle $\phi_{net}$ with respect to the X-axis 2702. Axis 2701 is the imaginary axis. The flow tube/balance bar amplitude ratio is the magnitude of vector 2703 over 2706.

Figure 28 is a vector diagram for the same flow meter having a relatively small flow tube amplitude vector 2803 and a relatively large balance bar vector 2806 resulting from a higher material density. The flow tube vector $V_{tube}$ has a normalized phase of $\phi_{tube}$ with respect to the X-axis 2802. The balance bar vector $V_{bal\ bar}$ has zero phase and is coincident with the X-axis 2802. The vector sum of these two vectors is the vector $V_{net}$ 2805 having a normalized angle of $\phi_{net}$ with respect to the X-axis 2802. The imaginary axis is 2801.

In comparing the vector diagrams of Figure 27 with that of Figure 28 it can be seen that the normalized phase of the resultant vector 2705 for the lighter density material flow is larger than the normalized phase of the resultant vector 2805 of Figure 28 for a material flow of greater density. Recalling that the normalized phase of the resultant vector on each of Figures 27 and 28 is the time delay of the velocity sensor of the associated flowmeter, it can be observed that a flowmeter operating with a material flow of lower density has greater sensitivity than does the same flowmeter operating with a material flow of a higher density. From this it can also be seen that a single tube flowmeter inherently has a greater flow sensitivity due to amplitude ratio change for lighter materials (Figure 27) than for heavier materials (Figure 28).

The embodiment of the present invention shown in Figure 7 provides a balance bar whose second bending mode resonant frequency is slightly below the first bending mode drive frequency. The Coriolis induced deflection of flow tube 601 excites the second bending mode in the balance bar 602 by way of brace bars 603 and 604. The vibration amplitude of the balance bar 602 vibration in its second bending mode is proportional to the Coriolis deflection amplitude of flow tube 601 and thus is proportional to the material flow rate. The vibration amplitude of balance bar 602 in its second bending mode on Figure 7 is also a function of the separation between the first bending mode (drive) frequency and the balance bar second bending mode resonant frequency. The closer the second bending mode frequency of the balance bar is to the first bending mode (drive) frequency, the greater will be the vibrational amplitude of the balance bar in its second bending mode. This relationship is shown in detail on Figure 9 which is a graph of the vibrational amplitude ratio of the balance bar in its second bending mode divided by the Coriolis defection of the flow tube versus the ratio between the first bending mode (drive) frequency and the balance bar 602 second bending mode resonant frequency. The x axis 902 indicates the ratio between the first bending mode (drive) frequency and the second bending mode resonant frequency of the balance bar. The y axis 901 represents the amplification factor of the Coriolis response of balance bar 602. As can be seen, the Coriolis response induced in balance bar 602 is at a maximum when the ratio between the drive frequency and the second bending mode resonant frequency of the balance bar is 1.0. The Coriolis induced response 904 of the balance bar decreases towards zero from its maximum as the ratio of the two frequencies on Figure 9 become greater than 1.0. The Coriolis response of the balance bar also decreases from its maximum as the ratio of these two frequencies becomes less than one.

It can also be seen from Figure 9 that the slope of the curve gets steeper as the frequency ratio approaches one from either direction. Thus a small change in drive frequency produces a bigger change in the second bending mode amplitude of the balance bar if the frequency ratio is near one than if it is further away. It is this change in slope of this amplification curve that is used in the present invention to determine what the frequency separation should be in order to precisely cancel the change in sensitivity due to vibration amplitude ratio change and other causes.

This relationship is used in accordance with the present invention to achieve a flowmeter having a flat calibration factor and constant flow sensitivity for material flows of different densities.

Figure 7 discloses the embodiment in which the balance bar second bending mode resonant frequency is below the drive frequency but is sufficiently close to the drive frequency so that Coriolis deflections in the flow tube excite the second bending mode Coriolis like vibrations in the balance bar. In this embodiment the balance bar second bending mode Coriolis-like vibrations and the flow tube Coriolis deflections are out of phase with each other. As a result the phase of the flow tube velocity at the right sensor has the same sign as the phase of the balance bar velocity at the right sensor. As shown on Figure 7, sensor SR on both the flow tube and the balance bar have already crossed the zero displacement position at the time the driver is crossing zero. This is a leading phase and is represented by a positive phase angle. The magnitude of the flow tube phase angle is proportional to the amplitude of the flow tube's Coriolis deflection. The magnitude of the balance bar phase angle is proportional to the balance bar's Coriolis like amplitude in its second bending mode. It can be seen in figure 7 that the balance bar behaves like another flow tube and enhances the flow sensitivity of the meter.

Figure 11 is the vector diagram for the embodiment of Figure 7. In this embodiment, the balance bar second bending mode resonant frequency is below the drive frequency. Velocity in the drive mode is shown on the X-axis while the Y axis is the imaginary axis. (The X axis could also be amplitude since velocity and amplitude are proportional in vibrating systems.) The flow tube velocity vector $V_{tube}$ 1104 has a length proportional to its peak velocity (or amplitude) in the drive mode. It is about twice as long as the balance bar velocity vector 1103, $V_{bal\,bar}$, because the flow tube has higher vibration amplitude than the balance bar. The instantaneous velocities of the flow tube and balance bar can be determined by the projected lengths of their vectors on the X-axis. The sum of the flow tube and balance bar velocity vectors is $V_{net}$. The length of the $V_{net}$ vector 1105 represents the peak relative velocity between the two components (magnet and coil) of the velocity sensor SR. The instantaneous relative velocity is the projection of the $V_{net}$ vector 1105 on the X-axis. The Coriolis deflection amplitude (or velocity) of the flow tube right sensor SR, is about three times as large as the balance bar second bending mode amplitude (or velocity) at the right sensor SR. This is evident by the greater normalized phase angle for the flow tube, $\phi_{tube}$, than for the balance bar, $\phi_{bal\,bar\,1}$. The angle between the $V_{net}$ vector 1105 and the X-axis is the net normalized phase, $\phi_{net}$, by which the voltage produced by the right velocity sensor, SR, leads the zero crossing of the driver. The left velocity sensor, SL, (not shown on Fig. 11) lags the driver by the same normalized phase angle. The normalized phase difference between the voltage signals of the two velocity sensors is the time delay and is proportional to the mass flow rate.

The dashed vectors of Figure 11 show the result of increasing the material density in the flowmeter. The phase angles are normalized (divided by frequency) to enable the vectors for both densities to be displayed on the same graph. On Figure 11 the flow tube drive mode amplitude (and velocity) vector 1104 has decreased from location 1112 to 1108 with the increased material density while its normalized phase $\phi_{tube}$ has remained unchanged. The flow tube behavior with material density change is the same as in prior art meters as can be seen in Figures 27 and 28 where Figure 27 represents a less dense material flow than Figure 28. The balance bar amplitude (and velocity) vector 1103 has increased in magnitude to that of the longer vector 1110 as in prior art meters. However, unlike prior art meters of Figures 27 and 28, the balance bar's_normalized phase angle has increased from $\phi_{bal\,bar\,1}$ to $\phi_{bal\,bar\,2}$ with the increase in material density. The normalized phase angle of the balance bar vector 1110 increased because the increase in material density lowered the drive mode frequency and moved it closer to the balance bar second bending mode resonant frequency. This resulted in a larger Coriolis like amplitude of vibration in the second bending mode and thus a larger normalized phase angle $\phi_{bal\,bar\,2}$.

The key to the present invention is that the change in normalized phase angle of the balance bar vector 1110 is the correct amount to leave the $V_{net}$ vector 1105 unchanged in both length at location 1111 and normalized phase angle $\phi_{net}$ from the $V_{net}$ vector 1105 with a lower density material. That the $V_{net}$ vector 1105 is unchanged in length is a result of the electronic amplitude control of the meter which is found in both the present invention and in prior art meters. That the $V_{net}$ vector 1105 is unchanged in the normalized phase angle $\phi_{net}$, is the result of the change in the balance bar second bending mode Coriolis like vibration amplitude with material density. This change in Coriolis like vibration amplitude of the balance bar second bending mode is sized to the correct magnitude by designing the balance bar so that its second bending mode Coriolis like resonant frequency is the correct distance away from the drive mode frequency. At this correct frequency separation, the slope of the amplification curve is such that the change in material density alters the frequency separation and changes the balance bar second bending mode Coriolis like vibration amplitude the amount needed to leave the $V_{net}$ vector 1105 unchanged and the sensitivity of the meter unchanged.

The change in meter flow sensitivity with density due to a shift in drive mode vibration amplitude ratio is unavoidable. It is possible, however, to adjust the amount of flow sensitivity shift. It is easy to see how this can be done by imagining a flowmeter with a balance bar that is infinitely heavy (and infinitely stiff so as to maintain the proper resonant frequency). This balance bar would have a drive mode vibration amplitude of zero to balance the flow tube. Changing the fluid density in the imaginary meter would have no effect on the flow calibration factor because the balance bar vibration amplitude would remain zero and the flow tube amplitude and phase would remain unchanged.

With a more realistic meter having a balance bar that is merely much heavier than the flow tube with fluid, the balance bar amplitude and velocity vector remain very small. Changing fluid density significantly changes the length of the balance bar velocity vector but, compared to the flow tube velocity vector, the balance bar velocity vector remains small. The length of the flow tube velocity vector changes the same amount as the balance bar velocity vector but in the opposite direction. This length change is only a small percentage of the longer flow tube velocity vector. Because the balance bar velocity vector remains very small compared to the flow tube velocity vector, the change in length of the balance bar vector with fluid density has only small effect on the phase angle of the net velocity vector and the meter flow sensitivity.

The change in meter flow sensitivity with change in fluid density is greatest when the drive mode vibration amplitude of the flow tube is approximately equal to the drive mode vibration amplitude of the balance bar. This is the case illustrated by Fig. 27 and Fig. 28. In Fig. 27 the fluid has a low density and the flow tube has a greater vibration amplitude than the balance bar. In Fig. 28 the fluid has a high density and the balance bar has a higher vibration amplitude than the flow tube. It can readily be seen from these figures that the change in the phase of the net velocity vector is large because both the flow tube velocity vector and the balance bar velocity vector undergo significant changes in length with fluid density change.

In summary, the change in flow sensitivity due to a change in vibration amplitude ratio is greatest when the vibration amplitude of the balance bar is near equal to the vibration amplitude of the flow tube. The change in sensitivity is least when the balance bar amplitude is very small compared to the amplitude of the flow tube. In prior art meters the balance bar drive mode vibration amplitude has always been made very small by making it as heavy as economically possible. This minimizes the effect of the changing vibration amplitude ratio with fluid density. As described elsewhere herein, however, there are other causes besides drive mode vibration amplitude ratio change for the flow sensitivity of the meter to change with fluid density. Some of the other causes change the flow sensitivity in the opposite direction as the drive mode vibration amplitude ratio changes. It thus is useful to recognize the relationship between balance bar mass and flow sensitivity shift. The balance bar mass can then be chosen so that the shift in sensitivity due to drive mode vibration amplitude ratio change is opposite to and cancels the shift in sensitivity due to other causes. One such other cause is the change in sensitivity due to the change in the ratio of the Coriolis deflection amplitude to the balance bar second bending mode amplitude with a change in density.

Fig.30 illustrates how the balance bar second bending amplitude changes as material density (and thus drive frequency) changes. In Fig. 30 the X-axis is frequency and on it are vertical lines for the drive frequency with a low density material (Drive Freq. 1), a high density material (Drive Freq. 2), and the balance bar second bending mode resonant frequency (Bal Bar 2nd Freq.). The Y-axis is the ratio of the balance bar second bending amplitude divided by the flow tube Coriolis amplitude. The solid curve is the ratio for the balance bar second bending amplitude with the light material having drive frequency 1. Where the vertical line of the balance bar second resonant frequency intersects this curve determines the balance bar second/flow tube Coriolis amplitude ratio. It thus can be seen that Drive Freq. 1 results in Bal Bar 2nd Amplitude 1. Likewise, the dashed curve is the amplitude ratio for the balance bar second bending with the more dense material having drive frequency 2. Drive Freq. 2 results in Bal Bar 2nd Amplitude 2. It can be seen on Fig. 30 that the difference in amplitude ratio for a given shift in drive frequency is a function of the location of the balance bar second resonant frequency with respect to the drive frequencies. If the separation is large, the change in the balance bar second amplitude ratio with material density is small. If the frequency separation is small (if the Bal Bar 2nd Freq. Line were moved to the right), then the change in the balance bar second amplitude ratio is large.

It can be seen in Fig. 7 that the balance bar deflection in its second bending mode looks like Coriolis deflection in a second flow tube. Thus an increase in balance bar second bending amplitude results in an increase in the phase of the balance bar velocity vector shown in Fig. 11. Fig. 11 also shows that if the increase in phase with density of the balance bar velocity vector is of the correct amount, then the net velocity vector can remain unchanged in normalized phase and amplitude. This means that the flow sensitivity of the meter can remain unchanged with changing density. Fig. 30 shows how the balance bar second bending amplitude change with density can be adjusted by the frequency separation between the balance bar second resonant frequency and the drive frequency. Smaller frequency separation results in greater sensitivity increase with density. Thus it is possible, by proper placement of the balance bar second bending resonant frequency, to design a flowmeter having a balance bar whose velocity vector phase changes the proper amount to leave the net velocity vector unchanged with material density change. Such a design produces a single tube Coriolis flow meter that has a flow sensitivity that is not effected by material density.

Figure 8 shows an embodiment where the balance bar second bending mode resonant frequency is above the drive frequency and sufficiently close to the drive frequency that the Coriolis deflections in the flow tube excite Coriolis like second bending mode vibrations in the balance bar. In this embodiment the balance bar second bending mode Coriolis like vibrations and the flow tube Coriolis deflections are in phase with each other. This means that the phase of the flow tube velocity at the right sensor SR has the opposite sign as the phase of the balance bar at the right pick off. As shown on Figure 8, sensor SR on the flow tube has already crossed the zero displacement position while sensor SR on the balance bar has not yet crossed the zero displacement position. The flow tube thus has a leading phase and the balance bar has a lagging phase. These are represented by positive and negative normalized phase angles respectively on Figure 12. The magnitude of the flow tube normalized phase angle $\phi_{tube}$ is proportional to the amplitude of the flow tube's Coriolis deflection while the magnitude of the balance bar normalized phase angle $\phi_{bal\ bar}$ is proportional to the balance bar's Coriolis like amplitude in its second bending mode. It can be seen in Figure 8 that the balance bar behaves like another flow tube only with negative Coriolis deflections.

Figure 12 is the vector diagram for the embodiment depicted in Figure 8. In this embodiment, the balance bar second bending mode frequency is above the drive frequency. Velocity in the drive mode is shown on the X-axis while the Y-axis is the imaginary axis. The flow tube velocity vector 1204 $V_{tube}$ has a length at location 1212 proportional to its peak velocity (or amplitude) in the drive mode. It is about twice as long as the balance bar velocity vector 1203, $V_{bal\ bar}$, because the flow tube has higher vibration amplitude in the drive mode than the balance bar. The instantaneous velocities of the flow tube and balance bar can be determined by the projected lengths of their vectors on the X-axis. The sum of the flow tube and balance bar velocity vectors is 1205 $V_{net}$. The length of the $V_{net}$ vector 1205 represents the peak relative velocity between the two components of the velocity sensor SR. The instantaneous relative velocity is the projection of the $V_{net}$ vector on the X-axis.

The Coriolis deflection amplitude (or velocity) of the flow tube right sensor SR 1204 is about three times as large as the balance bar Coriolis like second bending amplitude 1203 (or velocity) at the right sensor, SR. This is evident by the greater normalized phase angle $\phi_{tube}$ for the flow tube than the normalized phase angle $\phi_{bal\ bar}$, for the balance bar. Note that the normalized phase angle $\phi_{bal\ bar}$, of the balance bar vector is negative. This is the result of having the second bending resonant frequency above the drive frequency. The normalized phase angle $\phi_{net}$ between the $V_{net}$ vector 1205 and the X-axis is the net time delay by which the voltage produced by the right velocity sensor SR leads the zero crossing of the driver. The left velocity sensor, SL, (not shown on Fig. 11) lags the driver by the same time delay. The time difference between the voltage signals of the two velocity sensors is proportional to the mass flow rate.

The dashed vectors in Figure 12 show the result of increasing the material density in the flowmeter. Once again the phase angles are normalized (divided by frequency) to enable the vectors for both densities to be displayed on the same graph. It can be seen in Figure 12 that the flow tube drive mode amplitude (and velocity) vector 1204 has decreased in magnitude from that of location 1212 to that of location 1208 with the increased material density while its normalized phase $\phi_{tube}$ has remained unchanged. The balance bar amplitude (and velocity) vector 1203 in the drive mode has increased to the larger vector 1210. However, unlike prior art meters, and unlike the embodiment of Figure 7, the balance bar's normalized phase angle has decreased (moved closer to the X-axis) from $\phi_{bal\ bar\ 1}$ to $\phi_{bal\ bar\ 2}$ with the increase in material density. The normalized phase angle of the balance bar decreased because the increase in material density lowered the drive mode frequency and moved it further away from the balance bar second bending mode resonant frequency. This resulted in a smaller Coriolis like vibration amplitude in the second bending mode and thus a smaller normalized phase angle. Because the phase angle is negative, however, the decrease results in a gain in the meter sensitivity.

The key to the embodiment with the balance bar second bending resonant frequency above the drive frequency, as in the embodiment of Figures 7 and 12, is that the change in normalized phase angle of the balance bar with density change is the amount needed to leave the $V_{net}$ vector 1205 unchanged in both length and normalized phase angle. The $V_{net}$ vector 1205 is unchanged in length as a result of the electronic amplitude control of the meter which is found in both the present invention and in prior art meters. The $V_{net}$ vector 1205 is unchanged in its normalized phase angle as a result of the change in the balance bar second bending amplitude with material density. This change in amplitude of the balance bar second bending mode is sized to the magnitude needed by designing the balance bar so that its second bending mode resonant frequency is the correct distance away from the drive mode frequency. At the correct frequency separation, the slope of the amplification curve is such that the change in material density changes the frequency separation and changes the balance bar second bending mode amplitude the amount needed to leave the $V_{net}$ vector 1205 unchanged and the sensitivity of the meter unchanged.

Fig.29 illustrates how the balance bar second bending amplitude changes as the material density (and thus drive frequency) changes. Fig. 29 is the same as Fig.30 only the balance bar second bending resonant frequency is above the drive frequency rather than below it. As in Fig.30, the solid curve is the amplification ratio for the balance bar with the light material having drive frequency 1. Where the vertical line of the balance bar second resonant frequency intersects this curve determines the balance bar second/flow tube Coriolis amplitude ratio. It thus can be seen that Drive Freq. 1 results in Bal Bar 2nd Amplitude 1. Likewise, the dashed curve is the amplitude ratio for the balance bar second bending with the more dense material having drive frequency 2. Drive Freq. 2 results in Bal Bar 2nd Amplitude 2. In Fig.29 it can be seen that as the material density increases and the drive frequency decreases, the separation between the drive frequency and the balance bar second bending resonant frequency increases. This results in a decrease in the balance bar second bending amplitude. Thus in Fig. 29, balance bar amplitude 2 (for higher density material) is lower than balance bar amplitude 1. The decrease in amplitude results in a decrease in the magnitude of the phase angle of the balance bar velocity vector. However, because the phase angle is negative, the decrease in magnitude is an increase in phase of the balance bar velocity vector. This increase of balance bar phase (decrease of negative phase) with material density enables the net vector to remain unchanged in length and normalized phase. In Fig. 29, as in Fig, 30, the difference in amplitude ratio for a given shift in drive frequency is a function of the location of the balance bar second resonant frequency with respect to the drive frequencies. If the separation is large, the change in the balance bar second amplitude ratio with material density is small. If the frequency separation is small (if the Bal Bar 2nd Freq. Line were moved to the left), then the change in the balance bar second amplitude ratio is large. Thus, by designing the correct frequency separation, the change in balance bar velocity vector phase can be set to produce a constant net vector.

In summary, it can be seen in Fig. 8 that the balance bar deflection in its second bending mode looks like negative Coriolis deflection in a second flow tube. Thus a decrease in balance bar second bending amplitude results in a decrease in the negative phase of the balance bar velocity vector shown in Fig. 12. Fig. 12 also shows that if the decrease in negative phase with density of the balance bar velocity vector is of the correct amount, then the net velocity vector can remain unchanged in normalized phase and amplitude. This means that the flow sensitivity of the meter can remain unchanged with changing density. Fig. 29 shows how the balance bar second bending amplitude change with density can be adjusted by the frequency separation between the balance bar second resonant frequency and the drive frequency. Thus it is possible, by proper placement of the balance bar second bending resonant frequency, to design a flowmeter having a balance bar whose velocity vector phase changes the proper amount to leave the net velocity vector unchanged with material density change. Such a design produces a single tube Coriolis flow meter that has a flow sensitivity that is not effected by material density.

The present invention therefore has two embodiments. In one embodiment the balance bar second resonant frequency is below the drive frequency and in the other it is above the drive frequency. In both embodiments the balance bar second bending mode is excited by the Coriolis deflections of the flow tube. In both embodiments the amount of excitation of the balance bar is a function of the separation between the second resonant frequency and the drive frequency. In both embodiments a proper separation can be chosen such that the flow sensitivity of the meter will be independent of material density.

**Design Details**

The preceding description has dealt with the desired relationship of the second bending mode frequency of the balance bar to the first bending mode drive frequency. One embodiment has the frequency of the second bending mode located below the first bending mode drive frequency so that the meter flow sensitivity does not change with material density. Having the second bending mode frequency below the first bending mode drive frequency is a unique situation that some would call impossible. The design details whereby this is accomplished follow.

The two factors that determine resonant frequency of a vibrating structure are mass and spring rate. The equation for resonant frequency is:

$$\omega = \sqrt{\frac{K}{M}}$$

Where:

k = spring rate
M = mass

In order to get the frequency of the second bending mode below the first bending mode (drive) frequency, changes must be made to the conventional balance bar that both raise its first bending mode (drive) frequency and lower its second bending mode frequency. Increasing mass and lowering spring rate (stiffness) both serve to lower frequency. To lower the resonant frequency of the second bending mode so that is lower than the first bending mode drive frequency requires that the mass and stiffness of the balance bar be modified in areas where they have more significance in one mode than the other. Changing the mass in areas of low vibration amplitude has little effect. Likewise changing stiffness, k, in areas of low bending moment has little effect.

Figures 13 and 14 show the mode shapes and bending moment diagrams of the first and second bending modes of balance bar 1301. In order to soften (lower) k in the second bending mode without softening k in the first bending mode, balance bar 1301 stiffness can be reduced in those areas where its bending moment is near zero in the first bending mode and high in the second bending mode. Dashed lines i and ii of Figures 13 and 14 show these two locations to be 1306 and 1308. Lowering the stiffness, k, of balance bar 1301 at locations 1306 and 1308 has little effect on the frequency of the first bending mode of Figure 13 since the flow tube is relatively straight and has a low bending moment in these locations in the first bending mode. Thus, lowering the stiffness at locations 1306 and 1308 does not effect the first bending mode (drive) frequency. However, as shown on Figure 14, locations 1306 and 1308 have a high bending moment for the second bending mode. Thus, lowering the stiffness or spring rate of the balance bar at its locations 1306 and 1308 lowers the second bending mode frequency.

The first bending mode frequency of balance bar 1301 can be raised by increasing its stiffness in those areas where it has a high bending moment in its first bending mode and where the second bending mode has a bending moment near zero. Line iii of Figure 14 shows this location to be 1307. An inspection of Figures 13 and 14 indicates that at location 1307, balance bar 1301 has a high bending moment in its first bending mode of Figure 13 and a low bending moment in its second bending mode of Figure 14. Thus, a balance bar that has an increased stiffness in area 1307 will have a higher drive frequency while leaving the second bending mode frequency of Figure 14 unaffected.

To further lower the second bending mode frequency with respect to the first bending mode frequency, the mass of balance bar 1301 can be increased in those areas that have high amplitude in the second bending mode and low amplitude in the first bending mode. This is locations i and ii on Figures 13-17. Also, decreasing the mass at the line iii portion of balance bar 1301 on Figures 13-17 raises the drive frequency without impacting the second bending mode frequency. Since, as can be seen on Figures 13 and 14, the vibration amplitude for the first bending mode is high at location 1307 while the vibration amplitude for the second bending mode is low, as shown on Figure 14. Thus, removing some of the mass from location 1307 of the balance bar raises the drive frequency but does not affect the second bending mode frequency.

Figure 15 show an embodiment of this design. Balance bar 1503 stiffness is reduced by removing material from portions 1508 and 1509 on either side of its center region element 1506. This raises the drive frequency only slightly while it lowers the second bending frequency considerably.. Mass 1504 and 1505 is also added to the balance bar 1503 outside of the reduced stiffness region 1508 and 1509. This lowers the second bending mode frequency further. Mass is removed from the central portion 1506 of the balance bar 1503 leaving a void 1507. Figure 16 shows the resulting drive mode shape and Figure 17 shows the resulting Coriolis-second bending mode shape for the flowmeter of Figure 15.

Figure 18 shows another embodiment of the invention using bellows 1808 and 1809 to reduce the balance bar stiffness. The embodiment of Figure 18 is similar to that of Figures 15, 16 and 17 in that it has a center element 1806 comparable to element 1506 on Figure 15. The Figure 18 embodiment further has a reduced mass area 1807 comparable to element 1507 on Figure 15. It also has added masses 1504 and 1505 comparable to the added masses of Figure 15. Flexible bellows 1808 and 1809 on Figure 18 have reduced stiffness comparable to elements 1508 and 1509 on Figure 15. These characteristics of the embodiment of Figure 18 serve to raise the drive frequency and lower the frequency of the second bending mode in the same manner as is the case for the embodiment of Figure 15.

These design features described for Figures 15-18 can at best bring the second bending mode frequency of balance bar 1503 down to the first bending mode (drive) frequency. This can be illustrated by assuming that the central section of the balance bar 1503 has no mass and the reduced stiffness areas of the balance bar have no stiffness. In this most extreme case, the central section of the balance bar can be completely neglected and balance bar 1503 behaves like two independent cantilever beams 1511 (Figure 19). The first bending (drive) mode shape then looks like Figure 20 and the Coriolis-second bending mode shape looks like Figure 21. There is no difference in the balance bar shapes between the drive mode and second bending mode except that in the drive mode of Figure 20, the two balance bar beam ends 1511 are in phase and in the second bending mode of Figure 21 they are out of phase with each other. Since the bar ends are not connected, their phase relationship with each other makes no difference to their resonant frequencies. Thus the second bending (out of phase) mode of Figure 21 has a frequency equal to the first bending (in phase) mode of Figure 20.

The final design feature needed to lower the second bending mode frequency below the drive frequency may be achieved by altering the spring stiffness of the balance bar so that it has less stiffness in the second bending mode than in the first bending mode. The essence of this design feature is that the balance bar is made extremely stiff (except for the two reduced stiffness zones 1508 and 1509 of Figure 22) so that most of the flexing occurs in brace bar 1502. The net stiffness of balance bar 1503 then becomes a function of the vibration amplitude ratio between balance bar 1503 and flow tube 1501. The balance bar is made stiff in elements 1511. This has the effect of removing the effective spring from balance bar 1503 and concentrating the spring in brace bar 1502 so that the spring is adjacent to the end nodes. Moving the nodal location can then have a significant effect on the effective spring rate of the balance bar.

In Figure 22 flow tube 1501 and balance bar 1503 have equal drive mode vibration amplitudes. Figure 23 shows the same balance bar drive mode vibration amplitude in conjunction with a near zero flow tube vibration amplitude. In both figures, brace bar 1502 has a stationary node plane 2201 between flow tube 1501 and balance bar 1503. Stationary node plane 2201 is a zero vibration plane and vibrates with neither the flow tube nor the balance bar. In Figure 22, because of the equal vibration amplitudes, stationary node plane 2201 is located approximately half way between flow tube 1501 and balance bar 1503. In Figure 23, flow tube 1501 has a much lower vibration amplitude (and a larger mass) and therefore, stationary node plane 2201 in brace bar 1502 is located very near flow tube 1501. As far as the dynamics of the system are concerned, stationary node plane 2201 marks the end of the balance bar 1503 spring region in each brace bar 1502. The shorter effective spring of balance bar 1503 of Figure 22 gives it a higher effective stiffness than the longer effective spring of balance bar 1503 of Figure 23. With most of the spring function of balance bar 1503 residing in brace bars 1502, a higher flow tube/balance bar amplitude ratio results in a shorter and stiffer effective balance bar spring region than a lower amplitude ratio. Thus designing the meter so that it has a higher flow tube/balance bar amplitude ratio in the first bending (drive) mode than in the Coriolis-second bending mode can result in the Coriolis-second bending mode having a lower resonant frequency than the first bending (drive) mode. This is explained below.

The vibration amplitude ratio in the drive mode is determined by the mass and stiffness of the two vibrating members. If flow tube 1501 and balance bar 1503 have equal resonant frequencies (and they must for a dynamically balanced flowmeter) then the following relationship is true:

$$\sqrt{\frac{K_t}{M_t}} = \sqrt{\frac{K_{bb}}{M_{bb}}}$$

Also, the law of conservation of momentum holds:

$$M_t V_t = M_{bb} V_{bb}$$

It can be shown from these two laws that the vibration amplitude ratio is the inverse of the mass ratio and also that the mass ratio and stiffness ratio must be equal:

$$\frac{A_t}{A_{bb}} = \frac{M_{bb}}{M_t} = \frac{K_{bb}}{K_t}$$

Therefore, for balance bar 1503 to have a lower vibration amplitude than flow tube 1501, the balance bar needs to have a higher mass and stiffness than the flow tube.

The drive frequency is raised above the Coriolis second bending mode frequency in the following manner. The vibration amplitude ratio in the first bending mode between flow tube 1501 and balance bar 1503 is made high. This is done by making balance bar 1503 and its elements 1511 heavy and stiff compared to flow tube 1501. The result is that the stationary node plane 2201 in brace bar 1502 is close to balance bar 1503. This makes the spring rate of balance bar 1503 (in the drive mode) high. In the Coriolis second bending mode, however, the amplitude ratio is reversed. The flow tube Coriolis deflection amplitude is low because it is not being driven at its resonant frequency by the Coriolis force. The balance bar amplitude in the second bending mode is high because it is being excited by the Coriolis deflection of flow tube 1501 at or near its second bending mode resonant frequency. The flow tube/balance bar vibration amplitude ratio in the Coriolis second bending mode is thus low and results in the stationary node planes being close to flow tube 1501. This makes the balance bar springs relatively long and the balance bar spring rate low in the Coriolis second bending mode. This lowers the second bending mode frequency. The Coriolis second bending mode with the low amplitude ratio is shown in Figure 24. Because the vibration amplitude ratio is high in the drive mode and is low in the Coriolis second bending mode, the balance bar springs (which reside in brace bar 1502) are stiffer in the drive mode than in the Coriolis second bending mode. This enables the second bending mode to actually have a lower frequency than the first bending drive mode.

In summary, there are four design features that enable the balance bar second bending frequency to be below the drive frequency. The first is that the stiffness is lowered on both sides of its central region 1506. This lowers the balance bar second bending resonant frequency. This is done by elements 1508 and 1509 which are flexible and have a low spring rate. Second, the mass of balance bar 1503 is reduced in its central region 1506 and increased immediately outside of the reduced stiffness regions 1508 and 1509. This raises the drive frequency and lowers the balance bar second bending mode frequency. Third, balance bar 1503 is made stiff in its beam elements 1511 so that much of the spring of the vibrating structure occurs in brace bar 1502. This causes the balance bar spring stiffness to become a function of the vibration amplitude ratio between the flow tube and the balance bar. Fourth, the relative mass and stiffness of flow tube 1501 and balance bar 1503 is such made such that the vibration amplitude ratio (flow tube/balance bar) is higher in the drive mode than in the Coriolis-second bending mode. This allows the balance bar second bending mode to have a resonant frequency slightly less than the first bending (drive) mode. It may not be necessary to employ all of these design features to cause the balance bar second frequency to be below the drive frequency. It is only necessary to employ enough of these features to reduce the balance bar 1503 second bending mode frequency to be below the drive frequency enough that the flow sensitivity of the meter remains independent of material density.

The other embodiment of the present invention, that in which the second bending mode resonant frequency is placed above the drive frequency, is accomplished by use of the same design techniques as described for the first embodiment. The only difference is that the balance bar second bending resonant frequency does not have to be lowered as much. It has to be lowered some because the second bending mode normally has a resonant frequency so much higher than the drive frequency that it is not excited significantly by the Coriolis deflections of the flow tube (which occur at drive frequency). In order to lower the smaller amount for this embodiment it is necessary only to apply a few of the design techniques, or to apply them in moderation.

The preceding described embodiments of the invention have the form of a single straight tube with a parallel balance bar beside the flow tube. This has been done only for clarity of the inventive concepts. The principles and design features of the invention apply equally well to a single straight tube Coriolis flowmeter with a concentric balance bar (Figure 25) as well as to single curved tube flowmeters (Figure 26) with concentric balance bars. The preferred embodiment is the single straight tube with concentric balance bar of Figure 25. Figure 25 and Figure 26, for clarity, have the balance bar front half removed so that the flow tube can be seen. Figure 25 is the simplest and most compact embodiment.

The embodiment of Figure 25 is similar to that of Figures 22-24 except that the balance bar 2503 is concentric with and surrounds flow tube 2501. Balance bar 2503 is connected at its ends by brace bars 2502 to flow tube 2501. The center portion of the balance bar 2503 is light weight due to void 2507. Sections 2508 and 2509 are of reduced stiffness. Balance bar 2503 also has added mass elements 2504 and 2505 corresponding to elements 1504 and 1505 on Figures 22-24. This design of the embodiment of Figure 25 permits the second bending mode frequency of balance bar 2503 to be lower than the first bending mode (drive) frequency and provides the same advantages formerly described for the embodiment of Figures 22-24. Balance bar 2503 includes end sections 2511 and center section 2506.

Figure 26 discloses embodiment which is similar in most respects to that of Figure 25 except that flow tube 2601 and its surrounding concentric balance bar 2603 are not straight but instead, are curved upwards from horizontal at portions 2615 and 2616 from which they extend upward until they make the transition from vertical to a horizontal at areas 2617 and 2618. The center portion 2606 of brace bar 2603 has a low mass area 2607 comprising a void and elongated elements 2608 and 2609 which additionally have a low spring rate. Elements 2604 and 2605 provide additional mass in the same manner as do elements 2504 and 2505 of the embodiment of Figure 25 and in the same manner as do elements 1504 and 1505 in the embodiment of Figure 22-24.

On Figure 25, meter electronics element 2420 applies drives signals via path 2423 to driver D which cooperates with an adjacent magnet M to vibrate the flow tube 2501 and balance bar 2503 out of phase with each other at a resonant drive frequency. With material flow in the vibrating flow tube, Coriolis forces are applied to the flow tube to deflect its left-hand portion out of phase with respect to its right-hand portion as is well known in art. These Coriolis deflections are detected by left sensor SL and right sensor SR. Signals representing the Coriolis deflections are applied over paths 2421 and 2422 to meter electronics 2420 which processes the signals in the conventional manner to generate output information pertaining to the flowing material. This information is applied to path 2424 and may include material density, material flow rate, etc. On Figure 25, driver D, left sensor SL and right sensor SR each comprise the coil/magnet pair with the magnets being designated M and attached to the flow tube proximate the coil SL, D, and SR of each coil/magnet pair.

The embodiment of Figure 26 is similarly associated with an electronics element (not shown) comparable to meter electronics 2420. The embodiment of Figure 26 similarly has a driver D, a left sensor SL and a right sensor SR (all not shown) in the view of Figure 26 since the flow tube vibrates in a plane transverse to the presentation of Figure 26. In this view, only the left magnet M associated with sensor SL (not shown) and the center magnet M associated with driver D (not shown) and the right-hand magnet M associated with sensor SR (not shown) may be seen on Figure 26.

**Claims**

1. A method of operating a Coriolis flowmeter having a flow tube (2501) and a balance bar (2503) oriented substantially parallel to said flow tube; said method comprising the steps of:

    flowing material through said flow tube;
    vibrating said flow tube and said balance bar at a drive mode frequency substantially equal to the resonant frequency of said balance bar and said flow tube with material flow; whereby periodic Coriolis deflections are induced at said drive mode frequency in said vibrating flow tube as a result of the flow of material through the vibrating flow tube, said periodic Coriolis deflections being **characterized by** regions of deflection as well as nodes having no deflection; said drive mode frequency being dependent upon the density of said material flow and changing inversely with a change in density of said material flow;

    detecting the relative velocity of said flow tube with respect to said balance bar to generate signals representing said periodic Coriolis deflections of said flow tube; and deriving information regarding said flowing material in response to the generation of said signals, said signals having an amplitude that changes with density;

    **characterized in that** said balance bar has a non-uniform mass and stiffness distribution along its length such that the resonant frequency of said balance bar in a vibration mode having the same number of nodes as the periodic Coriolis deflections of said flow tube is close to the frequency of the periodic Coriolis deflections of said flow tube;

    Coriolis like deflections are induced in said balance bar at the drive mode frequency in response to said Coriolis deflections of said flow tube, said Coriolis like deflections of said balance bar having the same number of nodes as the periodic Coriolis deflections of said flow tube and representing a Coriolis like vibration mode for which the resonant frequency of said balance bar is close to the frequency of said periodic Coriolis deflections of said flow tube, said Coriolis like deflections of said balance bar having an amplitude proportional to the magnitude of said periodic Coriolis forces on said vibrating flow tube with material flow; and said generated signals representing said periodic Coriolis deflections of said flow tube are generated with respect to said Coriolis like deflections of said balance bar, said Coriolis like deflections thereby altering the amplitude of said signals;

    said Coriolis-like deflections of said balance bar having a vibration amplitude that is a function of the Coriolis deflections of the flow tube as well as the difference between said drive mode frequency and said resonant frequency of said Coriolis-like mode of vibration of said balance bar;

    a change in the drive mode frequency causes a change in the frequency separation between said drive mode frequency and the resonant frequency of said Coriolis like vibration mode;

    a change in said frequency separation changes the amplitude of said Coriolis like deflections; and

    a change in amplitude of said Coriolis like deflections with density negates the change in amplitude of said Coriolis deflections with density and results in a flow sensitivity magnitude that is independent of changes in density of said flowing material.

2. The method of claim 1 further including;

    operating said flowmeter to respond to a change in density of said material flow to alter the ratio between the drive mode vibration amplitude of said flow tube (2501) and said balance bar (2503) to change the flow sensitivity magnitude of said flowmeter in a first direction and further to alter the ratio between the Coriolis deflection amplitude of said flow tube and the Coriolis like deflection amplitude of said balance bar to change the flow sensitivity magnitude of said flowmeter in a second direction opposite to said first direction;

said changes in said flow sensitivity magnitude of said flowmeter in said first direction and in said second direction being effective to achieve a flowmeter flow sensitivity magnitude that is substantially independent to changes in material flow density.

3. The method of claim 1 wherein said Coriolis like deflections of said balance bar have a vibration amplitude that changes inversely with the magnitude of the separation of said drive mode frequency from the resonant frequency of said Coriolis like mode of vibration of said balance bar; said method further including;

altering the flow sensitivity magnitude of said flowmeter in a first direction in response to a change in the ratio of the drive mode vibration amplitude of said flow tube and balance bar resulting from said change in said density of said material flow;

altering the ratio between said Coriolis deflection amplitude of said flow tube and the amplitude of said Coriolis-like deflection of said balance bar in response to said change in drive mode frequency resulting from said change in density of said material flow to alter the flow sensitivity magnitude of said flowmeter in a second direction opposite to said first direction;

said changes in said flow sensitivity magnitude in said first direction and in said second direction being effective to achieve a substantially constant flow sensitivity magnitude of said flowmeter over a range of material flow densities;

4. The method of claim 1 further including the step of inducing Coriolis like deflections in said balance bar (2503) with said Coriolis like vibration mode having a resonant frequency less than said drive frequency; said Coriolis like deflections of said balance bar being out of phase with said periodic Coriolis deflections of said flow tube.

5. The method of claim 1 further including the step of inducing Coriolis like deflections in said balance bar (2503) with said Coriolis like vibration mode having a resonant frequency greater than said drive frequency; said Coriolis like deflections of said balance bar being in phase with said periodic Coriolis deflections of said flow tube.

6. The method of claim 1 wherein said Coriolis like deflections are induced in said balance bar (2503) by:

flexing ends of said flow tube in response to said periodic Coriolis deflections to flex a first end of brace bar means (2502); and
flexing a second end of said brace bar means in response to said flexing of said first end to induce said Coriolis like deflections in said balance bar (2503).

7. The method of claim 1 further comprising the step of transferring the effective spring of said balance bar (2503) from said balance bar to said brace bar means to lower a second bending mode resonant frequency of said balance bar.

8. The method of claim 1 further comprising the step of lowering the resonant frequency of said Coriolis like vibration mode of said balance bar (2503) by lowering the effective spring of said balance bar.

9. The method of claim 8 further comprising the step of lowering the resonant frequency of said Coriolis like vibration mode of said balance bar (2503) by the provision of at least one flexible portion of said balance bar together with the provision of increased mass (2504, 2505) on at least one other portion of said balance bar as well as the provision of a void (2507) in at least one portion of said balance bar.

10. The method of claim 1 wherein said method further comprises the step of lowering the resonant frequency of said Coriolis like vibration mode of said balance bar by the provision of flexible portions of said balance bar (2503) at locations of high bending moment of said balance bar for said Coriolis like deflections.

11. The method of claim 1 further comprising the step of maintaining the end nodes of said vibrating flow tube (2501) and said balance bar (2503) in brace bar means (2502) coupling said flow tube and said balance bar.

12. The method of claim 11 wherein said step of maintaining comprises the provision of stiff sections (2511, 2506) of said balance bar (2503) and flexible sections (2508, 2509) of said balance bar not comprising a stiff section.

13. The method of claim 1 wherein said drive mode comprises a first bending mode and wherein said Coriolis like deflections comprises the second bending mode of said balance bar (2503).

14. The method of claim 13 further comprising the step of lowering the frequency of said second mode of vibration of said balance bar (2503) by the provision of a center portion (2506) of said balance bar and a flexible portion (2508, 2509) on each side of said center portion of said balance bar together with the provision of increased mass (2504, 2505) on each side of said center portion.

15. The method of claim 13 further including the said step of lowering said resonant frequency of said second bending mode of said balance bar by the provision of flexible portions (2508, 2509) of said balance bar at locations of high bending moment of said balance bar and increased mass (2504, 2505) at locations of high vibrational amplitude in said second bending mode.

16. A Coriolis flowmeter having a flow tube (2501) adapted to receive a material flow, a balance bar (2503) oriented substantially parallel to said flow tube and brace bar means (2502) coupling said flow tube with said balance bar; said Coriolis flowmeter further comprising:

   driver means (D) arranged to vibrate said flow tube and said balance bar in phase opposition in a drive mode having a frequency substantially equal to the resonant frequency of the material filled flow tube and said balance bar such that periodic Coriolis deflections will be induced at said drive frequency in said vibrating flow tube when said material is flowing through it, said periodic Coriolis deflections being **characterized by** regions of deflections as well as nodes having no deflection; said drive mode frequency being dependent upon the density of said
   said drive mode frequency being dependent upon the density of said material flow and changing inversely with a change in density of said material flow;
   means (SL, SR) for detecting the velocity of said flow tube with respect to said balance bar for generating signals representing said periodic Coriolis deflections of said flow tube; said signals have an amplitude that changes with density;
   means (2420) for deriving material flow information in response of generation of said signals;

   **characterized in that** said balance bar (2503; 2603) has a structure providing a non-uniform mass and stiffness distribution along the length of said balance bar such that the resonant frequency of said balance bar in a vibration mode having the same number of nodes as the periodic Coriolis deflections of said flow tube is close to the frequency of the periodic Coriolis deflections of said flow tube, whereby Coriolis like deflections will be Coriolis like in said balance bar at the drive mode frequency in response to said Coriolis deflections of said flow tube, said Coriolis like deflections of said balance bar having the same number of nodes as the periodic Coriolis deflections of said flow tube and representing Coriolis like vibration mode for which the resonant frequency of said balance bar is close to the frequency of said periodic Coriolis deflections of said flow tube, said Coriolis like deflections of said balance bar having an amplitude proportional to the magnitude of periodic Coriolis forces of said vibrating flow tube with material flow;
   said Coriolis like deflections define an Coriolis like mode of vibration of said balance bar having a resonant frequency sufficiently close, but not equal, to said drive mode frequency to vary said amplitude of said Coriolis like deflections in response to a variation in said drive mode frequency; said Coriolis ike deflections thereby altering the amplitude of said signals;
   said Coriolis-like deflections of said balance bar having vibration amplitude that is a function of the Coriolis deflection of the flow tube as well as the difference between said drive mode frequency and said resonant frequency of said Coriolis-like mode of vibration of said balance bar;
   said signal generating means (SL, SR) generates said signals representing said periodic Coriolis deflections of said flow tube with reference to said Coriolis like deflections of said balance bar, thereby altering the amplitude of said generated signals;
   a change in the drive mode frequency causes a change in the frequency separation between said drive mode frequency and the resonant frequency of said Coriolis like vibration mode;
   a change in said frequency separation changes the amplitude of said Coriolis like deflections; and
   a change in amplitude of said Coriolis like deflections with density negates the change in amplitude of said Coriolis deflections with density and results in a flow sensitivity magnitude that is independent of changes in density of said flowing material.

17. The Coriolis flowmeter of claim 16 including:

   means (2501, 2503) for operating said flowmeter to respond to a change in density of said material flow to alter the ratio between the drive mode vibration amplitude of said flow tube and said balance bar to change the flow sensitivity magnitude of said flowmeter in a first direction;
   means (2501, 2503) responsive to a change in said drive mode frequency resulting from said change in density of said material flow to alter the ratio between the Coriolis deflection amplitude of said flow tube and the Coriolis-like deflection amplitude of said balance bar to change the flow sensitivity magnitude of said flowmeter in a second direction opposite to said first direction;

said changes in said flow sensitivity magnitude of said flowmeter in said first direction and in said second direction being effective to achieve a substantially constant flowmeter flow sensitivity magnitude that is substantially independent of changes in material flow density.

18. The Coriolis flowmeter of claim 16 further comprising:

means (2503) responsive to a change in density of said material flow to alter flow sensitivity magnitude of said flowmeter in a first direction in response to a change in the drive mode vibration amplitude ratio of said flow tube and balance bar;

means (2501) responsive to a change in said density to alter said drive mode frequency;

means to alter flow sensitivity magnitude of said flowmeter in a second direction opposite to said first direction in response to a change in the ratio of said Coriolis deflection amplitude of said flow tube to the Coriolis like deflection amplitude of said balance bar resulting from a change in drive mode frequency;

said changes in said flow sensitivity magnitude in said first direction and in said second direction being effective to achieve a substantially constant material flow sensitivity magnitude of said flowmeter.

19. The Coriolis flowmeter of claim 16 wherein said means (D) for vibrating said balance bar includes means for inducing said Coriolis like deflections in said balance bar at said drive frequency with the resonant frequency of said Coriolis like vibration mode being greater than said drive mode frequency and said Coriolis like deflections of said balance bar being in phase with said periodic Coriolis deflections of said flow tube.

20. The Coriolis flowmeter of claim 18 wherein said means (D) for inducing said Coriolis like deflections in said balance bar (2503) extends forces indicative of said periodic Coriolis deflections from said at least one flow tube through said brace bar (2502) to said balance bar to induce said Coriolis like deflections in said balance bar.

21. The Coriolis flowmeter of claim 16 further comprising means (2511, 2504, 2505, 2508, 2509, 2507, 2506) for lowering the resonant frequency of said Coriolis like vibration mode of said balance bar to a value less than that of said drive mode frequency and said Coriolis like deflections of said balance bar being out of phase with said periodic Coriolis deflections of said flow tube.

22. The Coriolis flowmeter of claim 21 wherein said means for lowering comprises added mass (2504, 2505) in said balance bar (2503) in regions of high vibrational amplitude in said Coriolis like vibration mode and comprises flexible portions (2508, 2509) of said balance bar at locations of high bending moment in said Coriolis like vibration mode.

23. The Coriolis flowmeter of claim 21 wherein said drive mode comprises a first bending mode and wherein said Coriolis like vibration mode comprises a second bending mode.

24. The Coriolis flowmeter of claim 22 wherein said means for lowering further comprises a rigid center portion (2506) of said balance bar and an added mass (2504, 2505) on each side of said rigid center portion and wherein said means for lowering further comprises flexible portions (2508, 2509) of said balance bar at locations on either side of said rigid center portion.

25. The Coriolis flowmeter of claim 24 wherein said means for lowering further comprises a void (2507) in said center portion for raising said drive frequency.

26. The Coriolis flowmeter of claim 24 wherein said flexible portion comprises bellows (1808, 1809).

27. The Coriolis flowmeter of claim 22 further comprising means (2508, 2509) for reducing the effective spring of said balance bar to reduce the resonant frequency of said Coriolis like vibration mode of said balance bar.

28. The Coriolis flowmeter of claim 16 further comprising means (2508, 2509) for concentrating the effective spring of said at least one flow tube and said balance bar in said brace bar.

29. The Coriolis flowmeter of claim 28 wherein said means for concentrating comprises stiff members (2511, 2506) on said balance bar and flexible members (2508, 2509) comprising each portion of said balance bar not comprising a stiff member.

30. The Coriolis flowmeter of claim 16 wherein the end node of said flow tube and balance bar is maintained in said brace bar.

31. The Coriolis flowmeter of claim 16 comprising a substantially straight flow tube (2501) and a substantially straight balance bar (2503).

**32.** The Coriolis flowmeter of claim 16 comprising a flow tube (2601) having a curved portion (2615) and a balance bar (2603) having a curved portion (2611 ).

**33.** The Coriolis flowmeter of claim 16 wherein said Coriolis like deflections comprise the second bending mode of said balance bar.

**Patentansprüche**

**1.** Verfahren zum Betreiben eines Coriolis-Durchflussmessers mit einer Durchflussröhre (2501) und einem Ausgleichsstab (2503), der im Wesentlichen parallel zu der Durchflussröhre ausgerichtet ist, wobei das Verfahren die folgenden Schritte umfasst:

Leiten von Material durch die Durchflussröhre;

Versetzen der Durchflussröhre und des Ausgleichsstabes in Schwingung bei einer Antriebsmodus-Frequenz, die im Wesentlichen der Resonanzfrequenz des Ausgleichsstabes und der Durchflussröhre bei Materialdurchfluss entspricht, wobei periodische Coriolis-Durchbiegungen bei der Antriebsmodus-Frequenz in der schwingenden Durchflussröhre aufgrund des Durchflusses von Material durch die schwingende Durchflussröhre ausgelöst werden und die periodischen Coriolis-Durchbiegungen durch Durchbiegungsbereiche sowie durch Knoten ohne Durchbiegung gekennzeichnet sind;

wobei die Antriebsmodus-Frequenz von der Dichte des Materialdurchflusses abhängt und sich umgekehrt zu einer Änderung der Dichte des Materialdurchflusses ändert;
Erfassen der relativen Geschwindigkeit der Durchflussröhre in Bezug auf den Ausgleichsstab, um Signale zu erzeugen, die die periodischen Coriolis-Durchbiegungen der Durchflussröhre darstellen, und Herleiten von Informationen bezüglich des durchfließenden Materials in Reaktion auf die Erzeugung der Signale, wobei die Signale eine Amplitude haben, die sich mit der Dichte ändert; **dadurch gekennzeichnet, dass** der Ausgleichsstab eine ungleichmäßige Massen- und Steifigkeitsverteilung über seine Länge hat, so dass die Resonanzfrequenz des Ausgleichsstabes in einem Schwingungsmodus, der die gleiche Anzahl von Knoten hat wie die periodischen Coriolis-Durchbiegungen der Durchflussröhre, nahe an der Frequenz der periodischen Coriolis-Durchbiegungen der Durchflussröhre liegt;
coriolisartige Durchbiegungen in dem Ausgleichsstab bei der Antriebsmodus-Frequenz in Reaktion auf die Coriolis-Durchbiegungen der Durchflussröhre ausgelöst werden, wobei die coriolisartigen Durchbiegungen des Ausgleichsstabes die gleiche Anzahl von Knoten wie die periodischen Coriolis-Durchbiegungen der Durchflussröhre haben und einen coriolisartigen Schwingungsmodus darstellen, bei dem die Resonanzfrequenz des Ausgleichsstabes nahe an der Frequenz der periodischen Coriolis-Durchbiegungen der Durchflussröhre liegt, wobei die coriolisartigen Durchbiegungen des Ausgleichsstabes eine Amplitude proportional zur Größe der periodischen Corioliskräfte an der schwingenden Durchflussröhre bei Materialdurchfluss haben; und die erzeugten Signale, die die periodischen Coriolis-Durchbiegungen der Durchflussröhre darstellen, in Bezug auf die coriolisartigen Durchbiegungen des Ausgleichsstabes erzeugt werden, und die coriolisartigen Durchbiegungen so die Amplitude der Signale ändern;
die coriolisartigen Durchbiegungen des Ausgleichsstabes eine Schwingungsamplitude haben, die eine Funktion der Coriolis-Durchbiegungen der Durchflussröhre sowie der Differenz zwischen der Antriebsmodus-Frequenz und der Resonanzfrequenz des coriolisartigen Schwingungsmodus des Ausgleichsstabes ist;
eine Änderung der Antriebsmodus-Frequenz eine Änderung des Frequenzabstandes zwischen der Antriebsmodus-Frequenz und der Resonanzfrequenz des coriolisartigen Schwingungsmodus verursacht;
eine Änderung des Frequenzabstandes die Amplitude der coriolisartigen Durchbiegungen ändert; und
eine Änderung der Amplitude der coriolisartigen Durchbiegungen mit der Dichte die Änderung der Amplitude der Coriolis-Durchbiegungen mit der Dichte negiert und zu einer Durchflussempfindlichkeitsgröße führt, die unabhängig von Änderungen der Dichte des durchfließenden Materials ist.

**2.** Verfahren nach Anspruch 1, das des Weiteren einschließt:

Betreiben des Durchflussmessers so, dass er auf eine Änderung der Dichte des Materialdurchflusses so anspricht, dass das Verhältnis zwischen der Antriebsmodus-Schwingungsamplitude der Durchflussröhre (2501) und des Ausgleichsstabes (2503) verändert wird, um die Durchflussempfindlichkeitsgröße des Durchflussmessers in einer ersten Richtung zu ändern, und des Weiteren das Verhältnis zwischen der Coriolis-Durchbiegungs-Amplitude der Durchflussröhre und der coriolisartigen Durchbiegungs-Amplitude des Ausgleichsstabes verändert, um die Durchflussempfindlichkeitsgröße des Durchflussmessers in einer zweiten, Richtung entgegengesetzt zu der ersten Richtung zu ändern;

wobei die Änderungen der Durchflussempfindlichkeitsgröße des Durchflussmessers in der ersten Richtung und in der zweiten Richtung bewirken, dass eine Durchflussempfindlichkeitsgröße des Durchflussmessers erreicht wird, die im Wesentlichen unabhängig von Änderungen der Dichte des Materialdurchflusses ist.

3. Verfahren nach Anspruch1, wobei die coriolisartigen Durchbiegungen des Ausgleichsstabes eine Schwingungsamplitude haben, die sich umgekehrt zu der Größe des Abstandes der Antriebsmodus-Frequenz zu der Resonanzfrequenz des coriolisartigen Schwingungsmodus des Ausgleichsstabes ändert, und das Verfahren des Weiteren einschließt:

Verändern der Durchflussempfindlichkeitsgröße des Durchflussmessers in einer ersten Richtung in Reaktion auf eine Änderung des Verhältnisses der Antriebsmodus-Schwingungs-Amplitude der Durchflussröhre und des Ausgleichsstabes, die aus der Änderung der Dichte des Materialdurchflusses resultiert;

Verändern des Verhältnisses zwischen der Coriolis-Durchbiegungs-Amplitude des Durchflussmessers und der Amplitude der coriolisartigen Durchbiegung des Ausgleichsstabes in Reaktion auf die Änderung der Antriebsmodus-Frequenz, die aus der Änderung der Dichte des Materialdurchflusses resultiert, um die Durchflussempfindlichkeitsgröße des Durchflussmessers in einer zweiten Richtung entgegengesetzt zu der ersten Richtung zu verändern;

wobei die Änderungen der Durchflussempfindlichkeitsgröße in der ersten Richtung und in der zweiten Richtung bewirken, dass eine im Wesentlichen konstante Durchflussempfindlichkeitsgröße des Durchflussmessers über einen Bereich von Dichten des Materialdurchflusses erreicht wird.

4. Verfahren nach Anspruch 1, das des Weiteren den Schritt des Auslösens von coriolisartigen Durchbiegungen in dem Ausgleichsstab (2503) einschließt, wobei der coriolisartige Schwingungsmodus eine Resonanzfrequenz hat, die geringer ist als die Antriebsfrequenz, und die coriolisartigen Durchbiegungen des Ausgleichsstabes phasenversetzt zu den periodischen Coriolis-Durchbiegungen der Durchflussröhre sind.

5. Verfahren nach Anspruch 1, das des Weiteren den Schritt des Auslösens von coriolisartigen Durchbiegungen in dem Ausgleichsstab (2503) einschließt, wobei der coriolisartige Schwingungsmodus eine Resonanzfrequenz hat, die größer ist als die Antriebsfrequenz, und die coriolisartigen Durchbiegungen des Ausgleichsstabes phasengleich zu den periodischen Coriolis-Durchbiegungen der Durchflussröhre sind.

6. Verfahren nach Anspruch 1, wobei die coriolisartigen Durchbiegungen in dem Ausgleichsstab (2503) ausgelöst werden, indem:

Enden der Durchflussröhre in Reaktion auf die periodischen Coriolis-Durchbiegungen gebogen werden, um ein erstes Ende einer Verbindungsstabeinrichtung (2502) zu biegen; und

ein zweites Ende der Verbindungsstabeinrichtung in Reaktion auf Biegen des ersten Endes gebogen wird, um die coriolisartigen Durchbiegungen in dem Ausgleichsstab (2503) auszulösen.

7. Verfahren nach Anspruch 1, das des Weiteren den Schritt des Übertragens der effektiven Federkonstante des Ausgleichsstabes (2503) von dem Ausgleichsstab auf die Verbindungsstabeinrichtung umfasst, um die Resonanzfrequenz eines zweiten Biegemodus des Ausgleichsstabes zu verringern.

8. Verfahren nach Anspruch 1, das des Weiteren den Schritt der Verringerns der Resonanzfrequenz des coriolisartigen Schwingungsmodus des Ausgleichsstabes (2503) durch Verringern der effektiven Federkonstante des Ausgleichsstabes umfasst.

9. Verfahren nach Anspruch 8, das des Weiteren den Schritt des Verringerns der Resonanzfrequenz des coriolisartigen Schwingungsmodus des Ausgleichsstabes (2503) durch Schaffung wenigstens eines flexiblen Teils des Ausgleichsstabes zusammen mit der Schaffung vergrößerter Masse (2504, 2505) an wenigstens einem anderen Teil des Ausgleichsstabes sowie der Schaffung eines Hohlraums (2507) in wenigstens einem Teil des Ausgleichsstabes umfasst.

10. Verfahren nach Anspruch 1, wobei das Verfahren des Weiteren den Schritt des Verringems der Resonanzfrequenz des coriolisartigen Schwingungsmodus des Ausgleichsstabes durch die Schaffung flexibler Teile des Ausgleichsstabes (2503) an Positionen starken Biegemoments des Ausgleichsstabes für die coriolisartigen Durchbiegungen umfasst.

11. Verfahren nach Anspruch 1, das des Weiteren den Schritt des Haltens der Endknoten der schwingenden Durchflussröhre (2501) und des Ausgleichsstabes (2503) in Verbindungsstabeinrichtungen (2502), die die Durchflussröhre und den Ausgleichsstab verbinden, umfasst.

12. Verfahren nach Anspruch 11, wobei der Schritt des Haltens die Schaffung steifer Abschnitte (2511, 2506) des Ausgleichsstabes (2503) und flexibler Abschnitte (2508, 2509) des Ausgleichsstabes, die keinen steifen Abschnitt umfassen, umfasst.

13. Verfahren nach Anspruch 1, wobei der Antriebsmodus einen ersten Biegemodus umfasst und wobei die coriolisartigen Durchbiegungen den zweiten Biegemodus des Ausgleichsstabes (2503) umfassen.

14. Verfahren nach Anspruch 13, das des Weiteren den Schritt des Verringerns der Frequenz des zweiten Schwingungsmodus des Ausgleichsstabes (2503) durch die Schaffung eines Mittelteils (2506) des Ausgleichsstabes und eines flexiblen Teils (2508, 2509) an jeder Seite des Mittelteils des Ausgleichsstabes zusammen mit der Schaffung einer vergrößerten Masse (2504, 2505) an jeder Seite des Mittelteils umfasst.

15. Verfahren nach Anspruch 13, das des Weiteren den Schritt des Verringerns der Resonanzfrequenz des zweiten Biegemodus des Ausgleichsstabes durch die Schaffung flexibler Teile (2508, 2509) des Ausgleichsstabes an Positionen starken Biegemoments des Ausgleichsstabes und vergrößerter Masse (2504, 2505) an Positionen starker Schwingungsamplitude in dem zweiten Biegemodus umfasst.

16. Coriolis-Durchflussmesser mit einer Durchflussröhre (2501), die so eingerichtet ist, dass sie einen Materialdurchfluss aufnimmt, einen Ausgleichsstab (2503), der im Wesentlichen parallel zu der Durchflussröhre ausgerichtet ist, und Verbindungsstabeinrichtungen (2502), die die Durchflussröhre mit dem Ausgleichsstab verbinden, wobei der Coriolis-Durchflussmesser des Weiteren umfasst:

eine Antriebseinrichtung (D), die so angeordnet ist, dass sie die Durchflussröhre und den Ausgleichsstab in einem Antriebsmodus mit einer Frequenz, die im Wesentlichen der Resonanzfrequenz der mit Material gefüllten Durchflussröhre und des Ausgleichsstabes entspricht, in Phasenopposition in Schwingung versetzt, so dass periodische Coriolis-Durchbiegungen bei der Antriebsfrequenz in der schwingenden Durchflussröhre ausgelöst werden, wenn Material durch sie fließt, wobei die periodischen Coriolis-Durchbiegungen durch Durchbiegungsbereiche sowie durch Knoten ohne Durchbiegung gekennzeichnet sind;

wobei die Antriebsmodus-Frequenz von der Dichte des Materialdurchflusses abhängt und sich umgekehrt zu einer Änderung der Dichte des Materialdurchflusses ändert;
Einrichtungen (SL, SR) zum Erfassen der Geschwindigkeit der Durchflussröhre in Bezug auf den Ausgleichsstab, um Signale zu erzeugen, die die periodischen Coriolis-Durchbiegungen der Durchflussröhre darstellen, wobei die Signale eine Amplitude haben, die sich mit der Dichte ändert;
eine Einrichtung (2420) zum Herleiten von Materialdurchfluss-Imformationen in Reaktion auf Erzeugung der Signale;
**dadurch gekennzeichnet, dass** der Ausgleichsstab (2503, 2603) einen Aufbau hat, der eine ungleichmäßige Massen- und Steifigkeitsverteilung über die Länge des Ausgleichsstabes schafft, so dass die Resonanzfrequenz des Ausgleichsstabes in einem Schwingungsmodus mit der gleichen Anzahl von Knoten wie die periodischen Coriolis-Durchbiegungen der Durchflussröhre nahe an der Frequenz der periodischen Coriolis-Durchbiegungen der Durchflussröhre liegt, wobei coriolisartige Durchbiegungen in Reaktion auf die Coriolis-Durchbiegungen der Durchflussröhre in dem Ausgleichsstab bei der Antriebsmodus-Frequenz coriolisartig sind und die coriolisartigen Durchbiegungen des Ausgleichsstabes die gleiche Anzahl von Knoten wie die periodischen Coriolis-Durchbiegungen der Durchflussröhre haben und einen coriolisartigen Schwingungsmodus darstellen, bei dem die Resonanzfrequenz des Ausgleichsstabes nahe an der Frequenz der periodischen Coriolis-Durchbiegungen der Durchflussröhre liegt, wobei die coriolisartigen Durchbiegungen des Ausgleichsstabes eine Amplitude haben, die proportional zu der Größe periodischer Coriolis-Kräfte der schwingenden Durchflussröhre bei Materialdurchfluss ist;
die coriolisartigen Durchbiegungen einen coriolisartigen Schwingungsmodus des Ausgleichsstabes definieren, der eine Resonanzfrequenz hat, die nahe genug an der Antriebsmodus-Frequenz liegt, ihr jedoch nicht entspricht, um die Amplitude der coriolisartigen Durchbiegungen in Reaktion auf eine Änderung der Antriebsmodus-Frequenz zu ändern, so dass die coriolisartigen Durchbiegungen die Amplitude der Signale verändern;
die coriolisartigen Durchbiegungen des Ausgleichsstabes eine Schwingungsamplitude haben, die eine Funktion der Coriolis-Durchbiegung der Durchflussröhre sowie der Differenz zwischen der Antriebsmodus-Frequenz und der Resonanzfrequenz des coriolisartigen Schwingungsmodus des Ausgleichsstabes ist;
die Signalerzeugungseinrichtungen (SL, SR) die Signale, die die periodischen Coriolis-Durchbiegungen der Durchflussröhre darstellen, in Bezug auf die coriolisartigen Durchbiegungen des Ausgleichsstabes erzeugen und so die Amplitude der erzeugten Signale verändern; wobei eine Änderung der Antriebsmodus-Frequenz eine Änderung des Frequenzabstandes zwischen der Antriebsmodus-Frequenz und der Resonanzfrequenz des coriolisartigen Schwingungsmodus verursacht; eine Änderung des Frequenzabstandes die Amplitude der coriolisartigen Durchbiegungen ändert; und eine Änderung der Amplitude der coriolisartigen Durchbiegungen mit der Dichte die Änderung der Amplitude der Coriolis-Durchbiegungen mit der Dichte negiert und zu einer Durchflussempfindlichkeitsgröße führt, die unabhängig von Änderungen der Dichte des durchfließenden Materials ist.

17. Coriolis-Durchflussmesser nach Anspruch 16, der enthält:

Einrichtungen (2501, 2503), mit denen der Durchflussmesser so betrieben wird, dass er auf eine Änderung der Dichte des Materialdurchflusses so anspricht, dass das Verhältnis zwischen der Antriebsmodus-Schwingungsamplitude der Durchflussröhre und des Ausgleichsstabes verändert wird, um die Durchflussempfindlichkeitsgröße des Durchflussmessers in einer ersten Richtung zu ändern; Einrichtungen (2501, 2503), die auf eine Änderung der Antriebsmodus-Frequenz, die aus der Änderung der Dichte des Materialdurchflusses resultiert, ansprechen, und das Verhältnis zwischen der Coriolis-Durchbiegungs-Amplidude der Durchflussröhre und der coriolisartigen Durchbiegungs-Amplitude des Ausgleichsstabes verändern, um die Durchflussempfindlichkeitsgröße des Durchflussmessers in einer zweiten Richtung entgegengesetzt zu der ersten Richtung zu ändern;

wobei die Änderungen der Durchflussempfindlichkeitsgröße des Durchflussmessers in der ersten Richtung und in der zweiten Richtung bewirken, dass eine im Wesentlichen konstante Durchflussempfindlichkeitsgröße des Durchflussmessers erreicht wird, die im Wesentlichen unabhängig von Änderungen der Dichte des Materialdurchflusses ist.

18. Coriolis-Durchflussmesser nach Anspruch 16, der des Weiteren umfasst:

eine Einrichtung (2503), die auf eine Änderung der Dichte des Materialdurchflusses anspricht und die strömungsabhängige Größe des Durchflussmessers in einer ersten Richtung in Reaktion auf eine Änderung des Antriebsmodus-Schwingungsamplituden-Verhältnisses der Durchflussröhre und des Ausgleichsstabes verändert;

eine Einrichtung (2501), die auf eine Änderung der Dichte anspricht und die Antriebsmodus-Frequenz verändert;

eine Einrichtung, die die strömungsabhängige Größe des Durchflussmessers in einer zweiten Richtung entgegengesetzt zu der ersten Richtung in Reaktion auf eine Änderung des Verhältnisses der Coriolis-Durchbiegungs-Amplitude der Durchflussröhre zu der coriolisartigen Durchbiegungs-Amplitude des Ausgleichsstabes, die aus einer Änderung der Antriebsmodus-Frequenz resultiert, verändert;

wobei die Änderungen der Durchflussempfindlichkeitsgröße in der ersten Richtung und in der zweiten Richtung bewirken, dass eine im Wesentlichen konstante Materialdurchflussempfindlichkeitsgröße des Durchflussmessers erreicht wird.

19. Coriolis-Durchflussmesser nach Anspruch 16, wobei die Einrichtung (D), die den Ausgleichsstab in Schwingung versetzt, eine Einrichtung enthält, die die coriolisartigen Durchbiegungen in dem Ausgleichsstab bei der Antriebsfrequenz auslöst, wobei die Resonanzfrequenz des coriolisartigen Schwingungsmodus größer ist als die Antriebsmodus-Frequenz und die coriolisartigen Durchbiegungen des Ausgleichsstabes phasengleich zu den periodischen Coriolis-Durchbiegungen der Durchflussröhre sind.

20. Coriolis-Durchflussmesser nach Anspruch 18, wobei die Einrichtung (D), die die coriolisartigen Durchbiegungen in dem Ausgleichsstab (2503) auslöst, Kräfte, die die periodischen Coriolis-Durchbiegungen anzeigen, von der wenigstens einen Durchflussröhre über den Verbindungsstab (2502) auf den Ausgleichsstab ausdehnt, um die coriolisartigen Durchbiegungen in dem Ausgleichsstab auszulösen.

21. Coriolis-Durchflussmesser nach Anspruch 16, der des Weiteren Einrichtungen (2511, 2504, 2505, 2508, 2509, 2507, 2506) umfasst, die die Resonanzfrequenz des coriolisartigen Schwingungsmodus des Ausgleichsstabes auf einen Wert unter dem der Antriebsmodus-Frequenz verringern, wobei die coriolisartigen Durchbiegungen des Ausgleichsstabes phasenversetzt zu den periodischen Coriolis-Durchbiegungen der Durchflussröhre sind.

**22.** Coriolis-Durchflussmesser nach Anspruch 21, wobei die Einrichtungen zum Verringern zusätzliche Masse (2504, 2505) in dem Ausgleichsstab (2503) in Bereichen starker Schwingungsamplitude in dem coriolisartigen Schwingungsmodus umfassen und flexible Teile (2508, 2509) des Ausgleichsstabes an Positionen starken Biegemoments in dem coriolisartigen Schwingungsmodus umfassen.

**23.** Coriolis-Durchflussmesser nach Anspruch 21, wobei der Antriebsmodus einen ersten Biegemodus umfasst und wobei der coriolisartige Schwingungsmodus einen zweiten Biegemodus umfasst.

**24.** Coriolis-Durchflussmesser nach Anspruch 22, wobei die Einrichtungen zum Verringern des Weiteren einen starren Mittelteil (2506) des Ausgleichsstabes und eine zusätzliche Masse (2504, 2505) an jeder Seite des starren Mittelteils umfassen und wobei die Einrichtungen zum Verringern des Weiteren flexible Teile (2508, 2509) des Ausgleichsstabes an Positionen auf beiden Seiten des starren Mittelteils umfassen.

**25.** Coriolis-Durchflussmesser nach Anspruch 24, wobei die Einrichtungen zum Verringern des Weiteren einen Hohlraum (2507) in dem Mittelteil zum Erhöhen der Antriebsfrequenz umfassen.

**26.** Coriolis-Durchflussmesser nach Anspruch 24, wobei der flexible Teil Bälge (1808, 1809) umfasst.

**27.** Coriolis-Durchflussmesser nach Anspruch 22, der des Weiteren Einrichtungen (2508; 2509) zum Reduzieren der effektiven Federkonstante des Ausgleichsstabes umfasst, um die Resonanzfrequenz des coriolisartigen Schwingungsmodus des Ausgleichsstabes zu reduzieren.

**28.** Coriolis-Durchflussmesser nach Anspruch 16, der des Weiteren Einrichtungen (2508, 2509) zum Konzentrieren der effektiven Federkonstante der wenigstens einen Durchflussröhre und dem Ausgleichsstab in dem Verbindungsstab umfasst.

**29.** Coriolis-Durchflussmesser nach Anspruch 28, wobei die Einrichtungen zum Konzentrieren steife Elemente (2511, 2506) an dem Ausgleichsstab und flexible Elemente (2508, 2509) umfassen, die jeden Teil des Ausgleichsstabes umfassen, der kein steifes Element umfasst.

**30.** Coriolis-Durchflussmesser nach Anspruch 16, wobei der Endknoten der Durchflussröhre und des Ausgleichsstabes in dem Verbindungsstab gehalten wird.

**31.** Coriolis-Durchflussmesser nach Anspruch 16, der eine im Wesentlichen gerade Durchflussröhre (2501) und einen im Wesentlichen geraden Ausgleichsstab (2503) umfasst.

**32.** Coriolis-Durchflussmesser nach Anspruch 16, der eine Durchflussröhre (2601) mit einem gekrümmten Teil (2615) und einen Ausgleichsstab (2603) mit einem gekrümmten Teil (2611) umfasst.

**33.** Coriolis-Durchflussmesser nach Anspruch 16, wobei die coriolisartigen Durchbiegungen den zweiten Biegemodus des Ausgleichsstabes umfassen.

**Revendications**

**1.** Procédé de fonctionnement d'un débitmètre de Coriolis ayant un tube d'écoulement (2501) et une barre de balancier (2503) orientée sensiblement parallèlement au dit tube d'écoulement ; ledit procédé comprenant les étapes consistant à :

faire écouler un matériau à travers ledit tube d'écoulement ;
faire vibrer ledit tube d'écoulement et ladite barre de balancier à une fréquence du mode d'entraînement sensiblement égale à la fréquence de résonance de ladite barre de balancier et dudit tube d'écoulement dans lequel s'écoule le matériau ; moyennant quoi des déflexions de Coriolis sont induites à ladite fréquence du mode d'entraînement dans ledit tube d'écoulement vibrant en conséquence de l'écoulement du matériau à travers le tube d'écoulement vibrant, lesdites déflexions périodiques de Coriolis étant **caractérisées par** des régions de déflexion ainsi que par des noeuds ne présentant pas de déflexion ;
ladite fréquence du mode d'entraînement étant dépendante de la densité dudit écoulement du matériau et changeant inversement avec un changement de la densité dans ledit écoulement du matériau ;
détecter la vitesse relative dudit tube d'écoulement par rapport à ladite barre de balancier pour générer des signaux représentant lesdites déflexions de Coriolis dudit tube d'écoulement ;
et dériver les informations concernant ledit matériau s'écoulant en réponse à la génération desdits signaux, lesdits signaux ayant une amplitude qui change avec la densité ;

**caractérisé en ce que** ladite barre de balancier a une masse non uniforme et une distribution de rigidité le long de sa longueur telle que la fréquence de résonance de ladite barre de balancier dans un mode de vibration ayant le même nombre de noeuds que les déflexions périodiques de Coriolis dudit tube d'écoulement est proche de la fréquence des déflexions périodiques de Coriolis dudit tube d'écoulement ;

des déflexions du type de Coriolis sont induites dans ladite barre de balancier à la fréquence du mode d'entraînement en réponse auxdites déflexions de Coriolis dudit tube d'écoulement, lesdites déflexions du type de Coriolis de ladite barre de balancier ayant le même nombre de noeuds que les déflexions périodiques de Coriolis dudit tube d'écoulement et représentant un mode de vibration du type de Coriolis pour lequel la fréquence de résonance de ladite barre de balancier est proche de la fréquence desdites déflexions périodiques de Coriolis dudit tube d'écoulement, lesdites déflexions du type de Coriolis de ladite barre de balancier ayant une amplitude proportionnelle à l'importance desdites forces périodiques de Coriolis sur ledit tube d'écoulement vibrant avec un matériau s'y écoulant ; et lesdits signaux générés représentant lesdites déflexions périodiques de Coriolis dudit tube d'écoulement sont générées par rapport auxdites déflexions du type de Coriolis de la barre de balancier, lesdites déflexions du type de Coriolis modifiant par ce moyen l'amplitude desdits signaux ;

lesdites déflexions du type de Coriolis de ladite barre de balancier ayant une amplitude de vibration qui est une fonction des déflexions de Coriolis du tube d'écoulement ainsi que de la différence entre ladite fréquence du mode d'entraînement et ladite fréquence de résonance dudit mode de vibration du type de Coriolis de ladite barre de balancier ;

un changement de la fréquence du mode d'entraînement cause un changement dans la séparation des fréquences entre ladite fréquence du mode d'entraînement et la fréquence de résonance dudit mode de vibration du type de Coriolis ;

un changement dans ladite séparation des fréquences change l'amplitude desdites déflexions du type de Coriolis ; et

un changement dans l'amplitude desdites déflexions du type de Coriolis avec la densité inverse le changement de l'amplitude desdites déflexions de Coriolis avec la densité et conduit à une importance de la sensibilité de l'écoulement qui est indépendante des changements de densité dudit matériau s'écoulant.

**2.** Procédé selon la revendication 1, comprenant en outre :

de faire fonctionner ledit débitmètre pour répondre à un changement de densité dudit écoulement de matériau pour modifier le rapport entre l'amplitude de vibration du mode d'entraînement dudit tube d'écoulement (2501) et de ladite barre de balancier (2503) pour changer l'importance de la sensibilité de l'écoulement dudit débitmètre dans une première direction et, en outre, pour modifier le rapport entre l'amplitude de déflexion de Coriolis dudit tube d'écoulement et l'amplitude de déflexion du type de Coriolis de ladite barre de balancier pour changer l'importance de la sensibilité de l'écoulement dudit débitmètre dans une seconde direction opposée à la première direction ;

lesdits changements de ladite importance de sensibilité de l'écoulement dudit débitmètre dans ladite première direction et ladite seconde direction étant efficaces pour obtenir une importance de sensibilité de l'écoulement du débitmètre qui est sensiblement indépendante des changements de densité de l'écoulement du matériau.

**3.** Procédé selon la revendication 1, dans lequel lesdites déflexions du type de Coriolis de ladite barre de balancier ont une amplitude de vibration qui change inversement avec l'importance de la séparation de ladite fréquence du mode d'entraînement relativement à la fréquence de résonance dudit mode de vibration du type de Coriolis de ladite barre de balancier ; ledit procédé comprenant en outre les étapes consistant à :

modifier l'importance de la sensibilité de l'écoulement dudit débitmètre dans une première direction en réponse à un changement du rapport de l'amplitude de vibration du mode d'entraînement dudit tube d'écoulement et de la barre de balancier résultant dudit changement de ladite densité dudit écoulement de matériau ;

modifier le rapport entre ladite déflexion de Coriolis dudit tube d'écoulement et l'amplitude de ladite déflexion du type de Coriolis de ladite barre de balancier en réponse au dit changement de la fréquence du mode d'entraînement résultant dudit changement de la densité dudit écoulement de matériau pour modifier l'importance de la sensibilité de l'écoulement dudit débitmètre dans une seconde direction opposée à ladite première direction ;

lesdits changements de ladite importance de la sensibilité de l'écoulement dans ladite première direction et ladite seconde direction étant efficaces pour obtenir une importance de la sensibilité de l'écoulement sensiblement constante dudit débitmètre sur une plage de densités d'écoulement de matériau.

**4.** Procédé selon la revendication 1, comprenant en outre l'étape consistant à induire des déflexions du type de Coriolis dans ladite barre de balancier (2503) avec le mode de vibration du type de Coriolis ayant une fréquence de résonance inférieure à ladite fréquence d'entraînement ; lesdites déflexions du type de Coriolis de ladite barre de balancier étant déphasées relativement auxdites déflexions périodiques de Coriolis dudit tube d'écoulement.

5. Procédé selon la revendication 1, comprenant en outre l'étape consistant à induire des déflexions du type de Coriolis dans ladite barre de balancier (2503) avec le mode de vibration du type de Coriolis ayant une fréquence de résonance supérieure à ladite fréquence d'entraînement ; lesdites déflexions du type de Coriolis de ladite barre de balancier étant en phase avec lesdites déflexions périodiques de Coriolis dudit tube d'écoulement.

6. Procédé selon la revendication 1, dans lequel lesdites déflexions du type de Coriolis sont induites dans ladite barre de balancier (2503) :

en fléchissant les extrémités dudit tube d'écoulement en réponse auxdites déflexions périodiques de Coriolis pour fléchir une première extrémité de barre de maintien (2502) ; et
en fléchissant une seconde extrémité de ladite barre de maintien en réponse à ladite flexion de ladite première extrémité pour induire lesdites déflexions du type de Coriolis dans ladite barre de balancier (2503).

7. Procédé selon la revendication 1, comprenant en outre l'étape consistant à transférer la cambrure effective de ladite barre de balancier (2503) depuis la barre de balancier vers ladite barre de maintien pour diminuer une seconde fréquence de résonance du mode de flexion de ladite barre de balancier.

8. Procédé selon la revendication 1, comprenant en outre l'étape consistant à diminuer la fréquence de résonance dudit mode de vibration du type de Coriolis de ladite barre de balancier (2503) en diminuant la cambrure effective de ladite barre de balancier.

9. Procédé selon la revendication 8, comprenant en outre l'étape consistant à diminuer la fréquence de résonance dudit mode de vibration du type de Coriolis de ladite barre de balancier (2503) par l'apport d'au moins une partie flexible de ladite barre de balancier avec l'apport d'une masse accrue (2504, 2505) sur au moins une autre partie de ladite barre de balancier ainsi que l'apport d'un vide (2507) dans au moins une partie de ladite barre de balancier.

10. Procédé selon la revendication 1, dans lequel ledit procédé comprend en outre l'étape consistant à diminuer la fréquence de résonance dudit mode de vibration du type de Coriolis de ladite barre de balancier par l'apport de parties flexibles de la barre de balancier (2503) à des emplacements de fort moment de flexion de ladite barre de balancier pour lesdites déflexions du type de Coriolis.

11. Procédé selon la revendication 1, comprenant en outre l'étape consistant à maintenir les noeuds d'extrémité dudit tube d'écoulement vibrant (2501) et de ladite barre de balancier (2503) dans la barre de maintien (2502) couplant ledit tube d'écoulement et ladite barre de balancier.

12. Procédé selon la revendication 11, dans lequel ladite étape de maintien comprend l'apport de sections rigides (2511, 2506) de ladite barre de balancier (2503) et de sections flexibles (2508, 2509) de ladite barre de balancier ne comprenant pas de section rigide.

13. Procédé selon la revendication 1, dans lequel ledit mode d'entraînement comprend un premier mode de flexion et dans lequel lesdites déflexions du type de Coriolis comprennent le second mode de flexion de ladite barre de balancier (2503).

14. Procédé selon la revendication 13, comprenant en outre l'étape consistant à diminuer la fréquence dudit second mode de vibration de ladite barre de balancier (2503) par l'apport d'une partie centrale (2506) de ladite barre de balancier et d'une partie flexible (2508, 2509) de chaque côté de ladite partie centrale de ladite barre de balancier avec l'apport d'une masse accrue (2504, 2505) de chaque coté de ladite partie centrale.

15. Procédé selon la revendication 13, comprenant en outre l'étape consistant à diminuer ladite fréquence de résonance dudit second mode de flexion de ladite barre de balancier par l'apport de parties flexibles (2508, 2509) de ladite barre de balancier à des emplacements de fort moment de flexion de ladite barre de balancier et d'une masse accrue (2504, 2505) à des emplacements de grande amplitude de vibration dans ledit second mode de flexion.

16. Débitmètre de Coriolis comprenant un tube d'écoulement (2501) adapté pour recevoir un écoulement de matériau, une barre de balancier (2503) orientée sensiblement parallèlement au dit tube d'écoulement et une barre de maintien (2502) couplant ledit tube d'écoulement avec ladite barre de balancier ; ledit débitmètre de Coriolis comprenant en outre :

un moyen d'entraînement (D) arrangé pour faire vibrer ledit tube d'écoulement et ladite barre de balancier en opposition de phase dans un mode d'entraînement ayant une fréquence sensiblement égale à la fréquence de résonance du tube d'écoulement rempli de matériau et ladite barre de balancier de telle manière que des déflexions périodiques de Coriolis soient induites à ladite fréquence d'entraînement dans ledit tube d'écoulement vibrant lorsque ledit matériau s'y écoule, lesdites déflexions périodiques de Coriolis étant **caractérisées par** des régions de déflexion ainsi que par des noeuds ne présentant pas de déflexion ;

ladite fréquence du mode d'entraînement étant dépendante de la densité dudit écoulement de matériau et changeant inversement avec un changement de la densité dudit écoulement de matériau ;

un moyen (SL,SR) pour détecter la vitesse dudit tube d'écoulement par rapport à ladite barre de balancier afin de générer des signaux représentant lesdites déflexions périodiques de Coriolis dudit tube d'écoulement ; lesdits signaux ayant une amplitude qui change avec la densité ;

un moyen (2420) pour dériver les informations d'écoulement de matériau en réponse à la génération desdits signaux ;

**caractérisé en ce que** ladite barre de balancier (2503 ; 2603) a une structure présentant une masse et une distribution de rigidité non uniformes le long de la longueur de ladite barre de balancier de sorte que la fréquence de résonance de ladite barre de balancier dans un mode de vibration ayant le même nombre de noeuds que les déflexions périodiques de Coriolis dudit tube d'écoulement soit proche de la fréquence des déflexions périodiques de Coriolis dudit tube d'écoulement, moyennant quoi les déflexions du type de Coriolis seront du type de Coriolis dans la barre de balancier à la fréquence du mode d'entraînement en réponse auxdites déflexions de Coriolis dudit tube d'écoulement, lesdites déflexions du type de Coriolis de ladite barre de balancier ayant le même nombre de noeuds que les déflexions périodiques de Coriolis dudit tube d'écoulement et représentant un mode de vibration du type de Coriolis pour lequel la fréquence de résonance de ladite barre de balancier est proche de la fréquence desdites déflexions périodiques de Coriolis dudit tube d'écoulement, lesdites déflexions du type de Coriolis de ladite barre de balancier ayant une amplitude proportionnelle à l'importance des forces périodiques de Coriolis dudit tube d'écoulement vibrant contenant un écoulement de matériau ;

lesdites déflexions du type de Coriolis définissent un mode de vibration du type de Coriolis de ladite barre de balancier ayant une fréquence de résonance suffisamment proche, mais pas égale, à ladite fréquence du mode d'entraînement pour faire varier ladite amplitude desdites déflexions du type de Coriolis en réponse à une variation de ladite fréquence du mode d'entraînement ; lesdites déflexions du type de Coriolis modifiant par ce moyen l'amplitude desdits signaux ;

lesdites déflexions du type de Coriolis de ladite barre de balancier ayant une amplitude de vibration qui est une fonction de la déflexion de Coriolis du tube d'écoulement ainsi que de la différence entre ladite fréquence du mode d'entraînement et ladite fréquence de résonance dudit mode de vibration du type de Coriolis de ladite barre de balancier ;

ledit moyen de génération de signaux (SL, SR) génère lesdits signaux représentant lesdites déflexions périodiques de Coriolis dudit tube d'écoulement en référence auxdites déflexions du type de Coriolis de ladite barre de balancier, modifiant par ce moyen l'amplitude desdits signaux générés ;

un changement de la fréquence du mode d'entraînement cause un changement dans la séparation des fréquences entre ladite fréquence du mode d'entraînement et la fréquence de résonance dudit mode de vibration du type de Coriolis ;

un changement dans ladite séparation des fréquences change l'amplitude desdites déflexions du type de Coriolis ; et

un changement dans l'amplitude desdites déflexions du type de Coriolis avec la densité inverse le changement de l'amplitude desdites déflexions de Coriolis avec la densité et conduit à une importance de la sensibilité de l'écoulement qui est indépendante des changements de densité dudit matériau s'écoulant.

**17.** Débitmètre de Coriolis selon la revendication 16 comprenant :

un moyen (2501, 2503) pour faire fonctionner ledit débitmètre pour répondre à un changement de densité dudit écoulement de matériau pour modifier le rapport entre l'amplitude de vibration du mode d'entraînement dudit tube d'écoulement et de ladite barre de balancier pour changer l'importance de la sensibilité de l'écoulement dudit débitmètre dans une première direction ;

un moyen (2501, 2503) qui réagit à un changement de ladite fréquence du mode d'entraînement résultant dudit changement de la densité dudit écoulement de matériau pour modifier le rapport entre l'amplitude de déflexion de Coriolis dudit tube d'écoulement et l'amplitude de déflexion du type de Coriolis de ladite barre de balancier pour changer l'importance de la sensibilité de l'écoulement dudit débitmètre dans une seconde direction opposée à la première direction ;

lesdits changements de ladite importance de sensibilité de l'écoulement dudit débitmètre dans ladite première direction et ladite seconde direction étant efficaces pour obtenir une importance de sensibilité de l'écoulement du débitmètre qui est sensiblement indépendante des changements de densité de l'écoulement du matériau.

18. Débitmètre de Coriolis selon la revendication 16 comprenant en outre :

un moyen (2503) qui réagit à un changement de la densité dudit écoulement de matériau pour modifier l'importance de la sensibilité de l'écoulement dudit débitmètre dans une première direction en réponse à un changement du rapport d'amplitude de vibration du mode d'entraînement dudit tube d'écoulement et de ladite barre de balancier ;
un moyen (2501) qui réagit à un changement de ladite densité pour modifier ladite fréquence du mode d'entraînement ;
un moyen pour modifier l'importance de la sensibilité de l'écoulement dudit débitmètre dans une seconde direction opposée à ladite première direction en réponse à un changement du rapport de ladite amplitude de déflexion de Coriolis dudit tube d'écoulement sur l'amplitude de déflexion du type de Coriolis de ladite barre de balancier résultant d'un changement de la fréquence du mode d'entraînement ;
lesdits changements de ladite importance de la sensibilité de l'écoulement dans ladite première direction et dans ladite seconde direction étant efficaces pour obtenir une importance de sensibilité de l'écoulement du matériau sensiblement constante dudit débitmètre.

19. Débitmètre de Coriolis selon la revendication 16, dans lequel ledit moyen (D) pour faire vibrer ladite barre de balancier comprend un moyen pour induire lesdites déflexions du type de Coriolis dans ladite barre de balancier à ladite fréquence d'entraînement avec la fréquence de résonance du mode de vibration du type de Coriolis étant supérieure à ladite fréquence du mode d'entraînement, et lesdites déflexions du type de Coriolis de ladite barre de balancier étant en phase avec lesdites déflexions périodiques de Coriolis dudit tube d'écoulement.

20. Débitmètre de Coriolis selon la revendication 18, dans lequel ledit moyen (D) pour induire lesdites déflexions du type de Coriolis dans ladite barre de balancier (2503) étend des forces indicatives desdites déflexions périodiques de Coriolis depuis ledit au moins un tube d'écoulement à travers ladite barre de maintien (2502) vers ladite barre de balancier pour induire lesdites déflexions du type de Coriolis dans ladite barre de balancier.

21. Débitmètre de Coriolis selon la revendication 16, comprenant en outre un moyen (2511, 2504, 2505, 2508, 2509, 2507, 2506) pour diminuer la fréquence de résonance dudit mode de vibration du type de Coriolis de ladite barre de balancier à une valeur inférieure à celle de ladite fréquence du mode d'entraînement, et lesdites déflexions du type de Coriolis de ladite barre de balancier étant déphasées par rapport auxdites déflexions périodiques du type de Coriolis dudit tube d'écoulement.

22. Débitmètre de Coriolis selon la revendication 21, dans lequel ledit moyen pour diminuer la fréquence comprend une masse ajoutée (2504, 2505) dans ladite barre de balancier (2503) dans des régions d'amplitude de vibration élevée dans ledit mode de vibration du type de Coriolis et comprend des parties flexibles (2508, 2509) de la barre de balancier à des emplacements de fort moment de flexion dans ledit mode de vibration du type de Coriolis.

23. Débitmètre de Coriolis selon la revendication 21, dans lequel ledit mode d'entraînement comprend un premier mode de flexion et dans lequel ledit mode de vibration du type de Coriolis comprend un second mode de flexion.

24. Débitmètre selon la revendication 22, dans lequel ledit moyen pour diminuer la fréquence comprend en outre une partie centrale rigide (2506) de ladite barre de balancier et une masse ajoutée (2504, 2505) de chaque côté de ladite partie centrale rigide, et dans lequel ledit moyen pour diminuer la fréquence comprend en outre des parties flexibles (2508, 2509) de ladite barre de balancier à des emplacements de chaque côté de ladite partie centrale rigide.

25. Débitmètre de Coriolis selon la revendication 24, dans lequel ledit moyen pour diminuer la fréquence comprend en outre un vide (2507) pratiqué dans ladite partie centrale pour augmenter ladite fréquence d'entraînement.

26. Débitmètre de Coriolis selon la revendication 24, dans lequel ladite partie flexible comprend des soufflets (1808, 1809).

27. Débitmètre de Coriolis selon la revendication 22, comprenant en outre un moyen (2508, 2509) pour réduire la cambrure effective de ladite barre de balancier pour réduire la fréquence de résonance dudit mode de vibration du type de Coriolis de ladite barre de balancier.

**28.** Débitmètre de Coriolis selon la revendication 16, comprenant en outre un moyen (2508, 2509) pour concentrer la cambrure effective dudit au moins un tube d'écoulement et de ladite barre de balancier dans ladite barre de maintien.

**29.** Débitmètre de Coriolis selon la revendication 28, dans lequel ledit moyen pour concentrer la cambrure comprend des éléments rigides (2511, 2506) sur ladite barre de balancier et des éléments flexibles (2508, 2509) comprenant chaque partie de ladite barre de balancier ne comprenant pas d'élément rigide.

**30.** Débitmètre de Coriolis selon la revendication 16, dans lequel le noeud d'extrémité dudit tube d'écoulement et de ladite barre de balancier est maintenu dans ladite barre de maintien.

**31.** Débitmètre de Coriolis selon la revendication 16, comprenant un tube d'écoulement sensiblement rectiligne (2501) et une barre de balancier sensiblement rectiligne (2503).

**32.** Débitmètre de Coriolis selon la revendication 16, comprenant un tube d'écoulement (2601) ayant une partie courbe (2615) et une barre de balancier (2603) ayant une partie courbe (2611).

**33.** Débitmètre de Coriolis selon la revendication 16, dans lequel lesdites déflexions du type de Coriolis comprennent le second mode de flexion de ladite barre de balancier.

FIG. 1

(PRIOR ART)

FIG. 2

FIG. 3

FIG. 4

FIG. 5

FIG. 6
(PRIOR ART)

FIG. 7

FIG. 8

FIG. 9

FIG. 10

FIG. 11

FIG. 12

EP 1 110 059 B1

1300

1306

1307

1308

DRIVE MODE

1301

BENDING
MOMENT

1302

1303

1304

1305

*i*

*iii*

*ii*

FIG. 13

1400

1401

1306

1307

1308

1406

SECOND BENDING
MODE

1301

BENDING
MOMENT

1402

1403

1404

1405

*i*

*iii*

*ii*

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

EP 1 110 059 B1

FIG. 27
(PRIOR ART)

FIG. 28
(PRIOR ART)

44

FIG. 29

FIG. 30